# EUROPÄISCHE PATENTANMELDUNG

(11) **EP 4 837 401 A2**
(43) Veröffentlichungstag der Anmeldung: **11.11.2026**
(21) Anmeldenummer: 26206932.1
(22) Anmeldetag: 17.12.2021
(51) Int. Cl.: A01B 69/00

(54) **KOMMUNIKATIONSSYSTEM FÜR EINE LANDWIRTSCHAFTLICHE MASCHINE UND VERFAHREN ZUR HERSTELLUNG EINER LANDWIRTSCHAFTLICHEN MASCHINE**

(30) Priorität: 18.12.2020 DE 102020134176
(62) Dokumentnummer(n) der früheren Anmeldung(en) nach Art. 76 EPÜ: 21840847.4 / 4 264 890
(71) Anmelder: Horsch Maschinen SE & Co. KG, 92421 Schwandorf (DE)
(72) Erfinder: BRAUN, Michael Johann, 92421 Schwandorf (DE); FERSTL, Matthias, 92421 Schwandorf (DE); MEIER, David, 92421 Schwandorf (DE); KAGERER, Christian, 92421 Schwandorf (DE)
(74) Vertreter: v. Bezold & Partner Patentanwälte - PartG mbB

(57) **Zusammenfassung**

Die Erfindung betrifft ein Kommunikationssystem für eine landwirtschaftliche Maschine sowie eine landwirtschaftliche Maschine mit einem solchem Kommunikationssystem. Die Erfindung betrifft ferner ein Herstellungsverfahren einer solchen landwirtschaftlichen Maschine. Das Kommunikationssystem (2) für eine landwirtschaftliche Maschine (1) umfasst eine Hauptsteuervorrichtung (4), die als zentrale Rechen- und Steuereinheit zur Steuerung von Maschinenfunktionen, wie vorzugsweise dem positionsgenauen An- und Abschalten von Verteil- und/oder Bearbeitungsprozessen, ausgebildet ist, sowie mindestens eine Nebenbetriebskomponente (5), die ausgebildet ist, eine ihr zugeordnete Betriebsfunktion in Abhängigkeit von Steuerdaten der Hauptsteuervorrichtung (4) und/oder eigenständig durchzuführen. Zum Senden und/oder Empfangen von Daten über ein Ethernet-Datennetz (3) bei einer Steuerung von Maschinenfunktionen weisen die Hauptsteuervorrichtung (4) und die mindestens eine Nebenbetriebskomponente (5) jeweils mindestens eine Ethernet-Schnittstelle (6) zum Anschluss an das Ethernet-Datennetz (3) auf.

## Beschreibung

Die Erfindung betrifft ein Kommunikationssystem für eine landwirtschaftliche Maschine sowie eine landwirtschaftliche Maschine mit einem solchem Kommunikationssystem. Die Erfindung betrifft ferner ein Herstellungsverfahren einer solchen landwirtschaftlichen Maschine.

Derzeitige in landwirtschaftlichen Maschinen verwendete Kommunikationssysteme haben in der Regel mehrere Jobrechner (Rechnereinheiten) mit einem Master und einen oder mehreren Slaves, wobei zudem jeder Jobrechner I/Os, d. h. Ein-/Ausgabe-Schnittstellen für entsprechende Sensorik, Aktorik etc. aufweist. Damit die verschiedenen Jobrechner ihre Abläufe aufeinander abstimmen, synchronisieren und notwendige Daten untereinander austauschen können, kommunizieren diese über einen CAN-Bus. Für die Kommunikation der landwirtschaftlichen Maschine mit einem Traktor oder einer standardisierten Mensch-Maschine-Schnittstelle wurde ein spezieller Standard, der ISOBUS, entwickelt. Die Mensch-Maschine-Schnittstelle im ISOBUS-Standard wird Virtual Terminal (VT) oder auch Universal Terminal (UT) genannt. ISOBUS ist der geläufige Name für landtechnische Datenbus-Anwendungen, die konform zu der Norm ISO 11783 sind. Diese Norm definiert erstens die physikalischen Eigenschaften, wie Stecker und Leitungen, zweitens die Art der Teilnehmer und drittens die Datenformate und Schnittstellen des Netzwerkes. Grundlagen sind die Protokolle SAE J1939 und NMEA-2000. Typische Datenübertragungsraten liegen bei 250 kBit/s, während bei einem CAN-Datenbus die Übertragungsraten bei 125 kBit/s bis 1000 kBit/s liegen.

Moderne landwirtschaftliche Maschinen haben jedoch zunehmend höhere Anforderungen an deren Funktionalität und damit deren Steuerungssysteme und die verwendeten Kommunikationssysteme. Hierbei kommt seitens der Landmaschine zunehmend komplexere Software zum Einsatz, die regelmäßig aktualisiert werden muss, z. B. durch Bereitstellung von neuen Funktionalitäten (Features). Entsprechend erforderliche Software-Aktualisierungen der bekannten Steuergeräte (Jobrechner), die hierfür üblicherweise geflasht werden müssen, sind jedoch zeitaufwändig und fehleranfällig. Ferner erfordert der Einsatz von Telemetrie-Anwendungen, z. B. der Echtzeitübertragung von Applikationskarten, die Übertragung und Speicherung großer Datenmengen, bei welchen bisher übliche ISOBUS-Systeme zunehmend an Grenzen stoßen. Durch die zunehmende Komplexität der Sensorik und Steuerungsverfahren müssen zunehmend größere Datenmengen über den Datenbus übertragen werden, wofür die mit dem CAN-Datenbus oder ISOBUS realisierbaren Datenübertragungsraten nicht ausreichen.

Es ist daher eine Aufgabe der Erfindung, ein verbessertes Kommunikationssystem für eine landwirtschaftliche Maschine bereitzustellen, mit dem die vorgenannten Probleme überwunden werden. Insbesondere soll eine vereinfachte Architektur und/oder ein Kommunikationssystem mit einer höheren Bandbreite zur Verfügung gestellt werden.

Ein erster allgemeiner Gesichtspunkt der Erfindung betrifft ein Kommunikationssystem für eine landwirtschaftliche Maschine (Landmaschine). Das Kommunikationssystem umfasst eine Hauptsteuervorrichtung, die als zentrale Rechen- und Steuereinheit zur Steuerung von Maschinenfunktionen der land-wirtschaftlichen Maschine ausgebildet ist. Derartige Maschinenfunktionen können beispielsweise das positionsgenaue An- und Abschalten und Steuern von landwirtschaftlichen Verteil- und/oder Bearbeitungsprozessen sein. Die Hauptsteuervorrichtung weist mindestens eine Ethernet-Schnittstelle zum Anschluss an ein Ethernet-Datennetz auf. Ein Ethernet-Datennetz ist eine an sich bekannte Technik, die Software (Protokolle usw.) und Hardware (Kabel, Verteiler, Netzwerkkarten usw.) für kabelgebundene Datennetze spezifiziert. Die Ethernet-Schnittstelle kann zum Senden und/oder Empfangen von Daten über das Ethernet-Datennetz bei einer Steuerung von Maschinenfunktionen verwendet werden.

Das Kommunikationssystem umfasst ferner mindestens eine Nebenbetriebskomponente, die ausgebildet ist, eine ihr zugeordnete Betriebsfunktion der landwirtschlichen Maschine durchzuführen. Die einer Nebenbetriebskomponente zugeordnete Betriebsfunktion deckt vorzugsweise nur einen Teil der gesamten Arbeitsfunktionen der landwirtschaftlichen Maschine ab, während die Hauptsteuervorrichtung als übergeordnete Steuervorrichtung zur Steuerung und/oder Regelung der Arbeitsfunktionen dient. Die Nebenbetriebskomponente kann ausgebildet sein, die zugeordnete Betriebsfunktion eigenständig und/oder in Abhängigkeit von Steuerdaten der Hauptsteuervorrichtung durchzuführen. Anders ausgedrückt kann die Nebenbetriebskomponente sowohl eigenständig Aufgaben und Funktionen ausführen und/oder direkt durch die Hauptsteuervorrichtung gesteuert werden bzw. ihre Ressourcen und Funktionalität der Hauptsteuervorrichtung bereitstellen. Die mindestens eine Nebenbetriebskomponente weist mindestens eine Ethernet-Schnittstelle zum Anschluss an das Ethernet-Datennetz auf, die wiederum zum Senden und/oder Empfangen von Daten über ein Ethernet-Datennetz bei einer Steuerung von Maschinenfunktionen verwendet werden kann.

Ein besonderer Vorzug des erfindungsgemäßen Kommunikationssystems liegt somit darin, dass eine Ethernet-basierte Kommunikation zur Steuerung von Maschinenfunktionen der landwirtschaftlichen Maschine ermöglicht wird, die im Hinblick auf die realisierbaren Datenraten CAN-Datenbus oder ISOBUS-basierten Kommunikationssystemen weit überlegen ist. Dadurch werden landwirtschaftliche Maschinenfunktionen ermöglicht, die eine schnelle Verarbeitung von großen Datenmengen erfordern. Ein weiterer Vorzug ist, dass aufgrund der schnellen Ethernet-basierten Kommunikation ein Großteil der Steuerungslogik zur Durchführung der landwirtschaftlichen Arbeitsprozesse, wie z. B. ein Ausbringen und Verteilen von flüssigen oder festen Wirkstoffen oder von Saatgut oder der Durchführung einer Bodenbearbeitung, in einem Steuergerät zentralisiert werden kann, das hier als Hauptsteuervorrichtung bezeichnet wird. Die Hauptsteuervorrichtung kann eine oder mehrere der Nebenbetriebskomponenten über das Ethernet-Datennetz zweckmäßig ansteuern. Die Nebenbetriebskomponenten können dadurch im Vergleich zu den in einem üblichen ISOBUS-basierten-Kommunikationssystem verteilt angeordneten Jobrechnern als effizientere Netzwerkknoten bzw. Steuergeräte ausgeführt werden.

In einer bevorzugten Ausführungsform umfasst das Kommunikationssystem ferner ein Ethernet-Datennetz. Entsprechend können die Hauptsteuervorrichtung und die mindestens eine Nebenbetriebskomponente über das Ethernet-Datennetz in Kommunikationsverbindung stehen.

Alternativ ist jedoch eine Ausführungsform eines Kommunikationssystems ohne Ethernet-Datennetz denkbar. Stattdessen könnte das Kommunikationssystem einen CAN-, ISOBUS und/ oder ein Local Interconnect Network-, LIN, -Datenbus aufweisen, über den/die die Hauptsteuervorrichtung und die mindestens eine Nebenbetriebskomponente in Kommunikationsverbindung steht/stehen. In dieser Ausführungsform weisen die Hauptsteuervorrichtung und die mindestens eine Nebenbetriebskomponente jeweils zusätzlich zu der Ethernet-Schnittstelle zumindest eine der folgenden Datenkommunikationsschnittstellen auf: eine CAN-Schnittstelle zum Anschluss an einen CAN-Datenbus, eine ISOBUS-Schnittstelle zum Anschluss an einen ISOBUS-Datenbus und eine LIN-Schnittstelle zum Anschluss an einen LIN-Bus (nachfolgend kurz als CAN-, ISOBUS und/ oder ein LIN-Schnittstelle bezeichnet).

In dieser Ausführungsform sind die Hauptsteuervorrichtung und die mindestens eine Nebenbetriebskomponente zwar technisch grundsätzlich zur Ethernet-basierten Kommunikation in der Lage, tatsächlich wird die Funktion jedoch (noch) nicht genutzt. Eine derartige Ausführungsform ist denkbar und sinnvoll für Ausführungsvarianten eines Kommunikationssystems zu Beginn einer Einführung einer neuen Ethernet-basierten Systemarchitektur, wenn z. B. noch nicht alle oder kaum Nebenbetriebskomponenten, z. B. von Drittanbietern, auf Ethernet-Basis umgestellt wurden, so dass die Kommunikation vorerst noch über z. B. einen CAN-Datenbus erfolgt. Eine zukünftige Umstellung auf eine Ethernet-basierte Kommunikation wird dadurch erleichtert.

Sofern in diesem Dokument von Steuern oder Steuervorrichtung die Rede ist, sollen hierbei auch ein Regeln und eine Regelvorrichtung umfasst sein. Die Hauptsteuervorrichtung kann dazu ausgebildet sein, Arbeitsaggregate der jeweiligen Landmaschine zu steuern, beispielsweise indem entsprechende Steuer- oder Regelprogramme und -algorithmen abgearbeitet werden oder auch Betriebsparameter und/oder Feldbearbeitungsparameter gesammelt und ggf. verarbeitet und ausgewertet werden. Die Hauptsteuervorrichtung kann ferner dazu ausgebildet sein, eine oder mehrere der Nebenbetriebskomponenten und/oder der zweiten Nebenbetriebskomponenten, die nachfolgend noch beschrieben werden, zu steuern, z. B. dadurch, dass Daten zur Ansteuerung der jeweiligen Nebenbetriebskomponenten an die Nebenbetriebskomponenten und/oder die zweiten Nebenbetriebskomponenten über das Ethernet-Datennetz und/oder einen anderen Datenbus gesendet werden. Die Hauptsteuervorrichtung kann ferner dazu ausgebildet sein, die im Betrieb der Landmaschine zunehmend größeren Mengen an anfallenden Prozess- und Zustandsdaten von Arbeitsvorgängen der landwirtschaftlichen Maschine zu Dokumentations- und Analysezwecken zentral zusammenzuführen, z. B. um diese an einen externen Server zu übertragen. Die Hauptsteuervorrichtung kann ferner als zentraler Kommunikationsserver des Kommunikationssystems dienen. Die Hauptsteuervorrichtung kann ferner dazu ausgebildet sein, eine Telemetrie, Telematik- und/oder Diagnosefunktionalität der landwirtschaftlichen Maschine bereitzustellen.

In einer vorteilhaften Ausführungsform kann die Hauptsteuervorrichtung eine Datenkommunikationsschnittstelle aufweisen, die eine CAN- Schnittstelle ist, vorzugsweise eine CAN- Schnittstelle gemäß dem CAN 2.0A, CAN 2.0B, oder CAN-FD Standard. Dies bietet den Vorzug, dass die Hauptsteuervorrichtung auch mit Geräten kommunizieren kann, die z. B. (nur) CAN-Datenbus-kompatibel sind, oder existierenden Steuergeräten bzw. Jobrechnern, deren Funktionalität auf diese Weise weiterhin verwendet werden kann. Ferner kann die Hauptsteuervorrichtung eine Datenkommunikationsschnittstelle aufweisen, die eine ISOBUS-Schnittstelle oder eine High-Speed-ISOBUS-Schnittstelle ist. Dies bietet den Vorzug, dass die Hauptsteuervorrichtung auch mit Geräten kommunizieren kann, die z. B. (nur) ISOBUS-kompatibel sind, z. B. mit einem Bedienterminal (VT).

Alternativ oder zusätzlich kann die Hauptsteuervorrichtung eine Datenkommunikationsschnittstelle aufweisen, die eine Local Interconnect Network-, LIN, -Bus-Schnittstelle ist. Entsprechend können Geräte, die mit einer LIN-Bus-Schnittstelle ausgestattet sind, integriert werden.

Entsprechend kann das Kommunikationssystem ein CAN-BUS, ISOBUS und/oder LIN-Bus-Datennetz aufweisen. Mittels CAN-, ISOBUS-, oder LIN-Schnittstellen können drahtgebundene Nebenbetriebskomponenten angebunden werden. Die Hauptsteuervorrichtung kann somit gemäß den vorstehend genannten Ausführungsformen zentral die Kommunikation mit unterschiedlichen Datennetzen und darin angeordneten Netzwerkkomponenten steuern.

Gemäß einem weiteren Aspekt können die Ethernet-Schnittstellen der Hauptsteuervorrichtung und/oder von Nebenbetriebskomponenten des Kommunikationssystems als High-Speed ISOBUS-Schnittstellen ausgeführt sein. Gemäß einem weiteren Aspekt kann das Ethernet-Datennetz eine Ethernet-Datennetz-Implementation gemäß 100BASE-TX, 1000BASE-T, 100BASE-T1 oder 1000BASE-T1 sein.

In einer weiteren vorteilhaften Ausführungsform kann das Kommunikationssystem ferner eine Mobilfunkschnittstelle und/oder mindestens eine Drahtlos-Nahbereichsverbindungs-Schnittstelle, beispielsweise eine WLAN-oder eine Bluetooth-Schnittstelle, aufweisen. Hierüber können drahtlose Nebenbetriebskomponenten angebunden werden. Ebenso können über diese Drahtlos-Schnittstellen Softwareaktualisierungen übertragen werden. Diese weiteren Drahtlos-Schnittstellen können in die Hauptsteuervorrichtung integriert sein, was einen besonders kompakten Aufbau ermöglicht. Alternativ oder zusätzlich können die Mobilfunkschnittstelle und/oder mindestens eine Drahtlos-Nahbereichsverbindungs-Schnittstelle durch eine der mindestens einen Nebenbetriebskomponente bereitgestellt werden. Beispielsweise kann eine Nebenbetriebskomponente bereitgestellt werden, deren Aufgabe es ist, die Drahtlos-Schnittstellen des Kommunikationssystems für die externe Drahtloskommunikation bereitzustellen. Diese Nebenbetriebskomponenten kann z. B. drahtgebunden mit der Hauptsteuervorrichtung kommunikationstechnisch verbunden sein. Diese Ausführungsvariante bietet den Vorzug, dass die Funktionalität der Drahtlos-Kommunikation in einer dedizierten Netzwerkkomponente gekapselt werden kann, was entwicklungstechnisch vorteilhaft hinsichtlich des sich schnell ändernden Kommunikationsstandards ist.

Die Mobilfunkschnittstelle kann eine Schnittstelle sein, die gemäß einem Standard des "Third Generation Partnership Project" (3GPP) implementiert ist, z. B. 3GPP 3G, 3GPP LTE, 3GPP 4G, 3GPP 5G New Radio oder einem Nachfolger hiervon. Die WLAN-Schnittstelle kann gemäß einem WLAN-Standard gemäß der Standardfamilie IEEE 802.11 ausgebildet sein.

In einer weiteren vorteilhaften Ausführungsform ist auf der Hauptsteuervorrichtung als Betriebssystem Unix oder ein Unix-Derivat, vorzugsweise Linux, installiert. Durch die Verwendung von Unix oder eines Unix-Derivats kann auf eine größere Auswahl an erhältlichen Programmbibliotheken zurückgegriffen werden als bei der klassischen Steuergeräteentwicklung, was schnellere und agilere Anpassungen ermöglicht.

In einer weiteren besonders bevorzugten Ausführungsform ist die Hauptsteuervorrichtung programmtechnisch eingerichtet, mehrere Prozessorkerne zu nutzen. Die Hauptsteuervorrichtung kann somit hardwareseitig einen Mehrkernprozessor (Mehrkern-CPU) oder mehrere Mehrkernprozessoren (Mehrkern-CPUs) aufweisen. Die Hauptsteuervorrichtung kann programmtechnisch eingerichtet sein, ihre Steueraufgaben in mehrere Teilaufgaben aufzuteilen, die entsprechend unterschiedlichen Prozessorkernen zur Bearbeitung zugewiesen werden. Diese Ausführungsform ermöglicht somit eine besonders performante Ausführung von komplexen landwirtschaftlichen Arbeitsvorgängen, beispielsweise solche, bei denen im Betrieb mittels Kameras Bilddaten der zu bearbeitenden Bodenfläche und/oder des Pflanzenbestands generiert werden, die quasi in Echtzeit ausgewertet werden, um in Abhängigkeit der Auswertung Arbeitsprozesse der landwirtschaftlichen Maschine zu steuern.

In einer vorteilhaften Ausführungsvariante hiervon kann die Hauptsteuervorrichtung zur Nutzung der mehreren Prozessorkerne einen ersten Applikationskern aufweisen, der zur Steuerung der Maschinenfunktionen ausgebildet ist. Der erste Applikationskern bündelt somit Funktionalität der Hauptsteuervorrichtung, die hardwareseitig einem eigenen Prozessorkern zu Bearbeitung zugewiesen wird.

Die Hauptsteuervorrichtung kann ferner zur Nutzung der mehreren Prozessorkerne mehrere Applikationskerne unterschiedlicher Art aufweisen, z. B. Applikationskerne und Echtzeitkerne. Die Hauptsteuervorrichtung kann zur Nutzung der mehreren Prozessorkerne beispielsweise zumindest einen der folgenden weiteren Applikationskerne aufweisen: einen zweiten Applikationskern, einen Sicherheitskern und einen Echtzeitkern.

Unter einem Applikationskern, z. B. erster Applikationskern, zweiter Applikationskern, Sicherheitskern, Echtzeitkern, wird hierbei eine programmtechnisch bzw. softwaretechnisch in der Hauptsteuervorrichtung gekapselte Funktionalität der landwirtschaftlichen Maschine verstanden, die hardwareseitig einem separaten Kern des Mehrprozessorkerns oder einem separaten Prozessor (CPU) zur Bearbeitung zugeordnet ist.

Der zweite Applikationskern kann eine bestimmte Teilfunktionalität der landwirtschaftlichen Maschine bereitstellen. Beispielsweise kann der zweite Applikationskern eine Telematik- und/oder Diagnosefunktionalität der landwirtschaftlichen Maschine ausbilden. Alternativ oder zusätzlich kann der zweite Applikationskern ausgebildet sein, eine Verarbeitung von Kameradaten der landwirtschaftlichen Maschine durchzuführen. Hierdurch kann die Leistungsfähigkeit des Kommunikationssystems verbessert werden.

Der Sicherheitskern kann ausgebildet sein, bei Vorliegen einer sicherheitskritischen Situation die Ansteuerung der landwirtschaftlichen Maschine und/oder mindestens eines Aktors der landwirtschaftlichen Maschine, der eine sicherheitsrelevante Bewegung im Sinne der funktionalen Sicherheit ausführt, durch den ersten Applikationskern zu übersteuern und die landwirtschaftliche Maschine und/oder den mindestens einen Aktor in einen sicheren Betriebszustand im Sinne der funktionalen Sicherheit zu überführen.

Aus der Praxis ist bekannt, dass die Entwicklung von Steuerungen, beispielsweise für elektrisch oder hydraulisch betriebene Aktoren, generell unter dem Aspekt der funktionalen Sicherheit erfolgen muss. Hierzu sind Normen bekannt, durch welche die Anforderungen an diese funktionale Sicherheit definiert werden, beispielsweise die Norm IEC 61508. Landmaschinen bzw. landwirtschaftliche Maschinen fallen hierbei unter die Normen EN ISO 13849 und ISO 25119. Die Umsetzung dieser Normen erfordert jeweils einen sehr großen Verwaltungs- und Dokumentationsaufwand.

Die Zuordnung von sicherheitskritischen Situationen im Sinne der funktionalen Sicherheit zu einem eigenen Sicherheitskern bietet zwei Vorteile. Erstens können Verwaltungs- und Dokumentationsaufwände reduziert werden, denn diese fallen durch die Abtrennung bzw. Kapselung der Funktionalität in Form eines Sicherheitskerns nur an, wenn Änderungen am Sicherheitskern erforderlich sind, nicht jedoch an den anderen Kernen. Zweitens kann sichergestellt werden, dass sicherheitskritische Funktionen zuverlässig und schnell ausgeführt werden und nicht von anderen Steuerungsfunktionen beeinflusst werden, wenn diese gleichzeitig um Hardware-Ressourcen konkurrieren. Dies wird mit einer dedizierten Hardware-Ressource in Form eines eigenen Prozessorkerns oder sogar eigenen Prozessors, der die Funktionalität des Sicherheitskerns hardwareseitig ausführt, sichergestellt.

Der Echtzeitkern kann ausgebildet sein, ausgewählte Maschinenfunktionen der landwirtschaftlichen Maschine in Echtzeit oder im Wesentlichen ohne Latenz zu steuern. Hierbei kann der Echtzeitkern auf einem eigenen Kern eines Mehrkernprozessors ausgeführt werden. Alternativ kann der Echtzeitkern auf einem separaten Prozessor implementiert sein, beispielsweise unter Verwendung eines Echtzeitbetriebssystems oder ohne Betriebssystem mittels einer sog. Bare-Metal-Programmierung.

In einer besonders vorteilhaften Ausführungsform ist der Sicherheitskern als Echtzeitkern implementiert. Dies ermöglicht eine Echtzeit-Ausführung von Sicherheitsfunktionen.

In einer weiteren Ausführungsform ist die Hauptsteuervorrichtung ausgebildet, zu einem vorgebbaren Zeitpunkt eine Softwareaktualisierung einer Nebenbetriebskomponente durchzuführen und dabei die zu aktualisierende Software von der Hauptsteuervorrichtung über das Ethernet-Datennetz an die Nebenbetriebskomponente zu übertragen. Das Ethernet-Datennetz ermöglicht hierzu eine High-Speed-Datenübertragung, so dass ein zeitaufwändiges und fehleranfälliges Flashen der Steuergeräte vermieden werden kann. Einer weitere Ausführungsvariante hiervon sieht vor, dass die Hauptsteuervorrichtung die Softwareaktualisierung über eine Drahtlos-Schnittstelle, z. B. eine Mobilfunkschnittstelle oder eine WLAN-Schnittstelle, empfängt, also "over-the-air" empfängt, und anschließend über das Ethernet-Datennetz an eine oder mehrere der Nebenbetriebskomponenten überträgt. Auf diese Weise kann z. B. ein Hersteller von Landmaschinen zentral Softwareaktualisierungen bereitstellen.

Durch die Verwendung von leistungsstarken Schnittstellen für die High-Speed-Datenübertragung können im System auch kryptographische Verfahren praktikabel verwendet werden, um die Kommunikation abzusichern und sicherheitskritische Funktionen vor unberechtigter Verwendung zu schützen, z. B. mit Hilfe von digitalen Zertifikaten. Entsprechend kann das Kommunikationssystem ausgebildet sein, die Kommunikation über die Ethernet-Schnittstellen zu verschlüsseln und/oder mit Hilfe von digitalen Zertifikaten den Zugriff auf das Kommunikationssystem abzusichern.

In einer weiteren Ausführungsform ist die Hauptsteuervorrichtung ausgebildet, zentral auf alle Datenkommunikationsschnittstellen im Kommunikationssystem zur Ablaufverfolgung (engl. tracing) und/oder zum Logging zuzugreifen und die darüber erfassten Daten zu Diagnosezwecken bereitzustellen. Hierdurch können die Sicherheit erhöht und die Diagnosemöglichkeiten verbessert werden.

In einer weiteren Ausführungsform weist die mindestens eine Nebenbetriebskomponente eine Nebenbetriebskomponente auf, die als Ein- und Ausgangsmodul ausgebildet ist, jeweils aufweisend mindestens einen Eingangsanschluss zum Anschluss eines Sensors und mindestens einen Ausgangsanschluss zum Anschluss eines Aktors. Die Nebenbetriebskomponente stellt somit ein sogenanntes I/O-Modul dar, das eine oder mehrere verschiedene Kommunikationsschnittstellen aufweist. Zudem kann ein I/O-Modul analoge und digitale Ein- und Ausgänge, zusätzlich zur Ethernet-Schnittstelle, aufweisen zum Anschluss von Sensoren und Aktoren etc.

Hierbei ist eine Ausführungsform vorteilhaft, bei der alle Sensoren und Aktuatoren der landwirtschaftlichen Maschine über ein oder mehrere als Ein- und Ausgangsmodul ausgebildete Nebenbetriebskomponenten in Kommunikationsverbindung mit der Hauptsteuervorrichtung stehen. Gemäß einem weiteren Aspekt kann die Hauptsteuervorrichtung keine analogen Eingänge und keine analogen Ausgänge aufweisen.

Gemäß einem weiteren Aspekt kann die Hauptsteuervorrichtung nur mittelbar mit Sensoren und Aktoren der landwirtschaftlichen Maschine in Kommunikationsverbindung stehen, vorzugsweise über eine oder mehrere als Ein- und Ausgangsmodul ausgebildete Nebenbetriebskomponenten.

Gemäß einem weiteren Aspekt kann ein Ansteuern eines Aktors und/oder das Einlesen von Sensordaten eines Sensors der landwirtschaftlichen Maschine ausschließlich durch eine oder mehrere als Ein- und Ausgangsmodul ausgebildete Nebenbetriebskomponenten erfolgen, die ausgebildet sind, das Ansteuern und/oder das Einlesen eigenständig oder in Abhängigkeit von Steuerbefehlen, die von der Hauptsteuervorrichtung erzeugt werden, durchzuführen.

Es ist somit möglich, dass die Hauptsteuervorrichtung über keine Ein- und Ausgänge zum direkten Anschließen von Aktoren und Sensoren verfügt, sondern als separate Recheneinheit fungiert und lediglich Datenschnittstellen zur Kommunikation mit den Nebenbetriebskomponenten aufweist. Ausführende Tätigkeiten wie das Ansteuern und Regeln von Aktorik oder das Rücklesen von Sensorik übernehmen dann die Nebenbetriebskomponenten, an denen diese Aktorik und Sensorik angeschlossen ist. Diese können als sog. Slave fungieren, die von der als Master fungierenden Hauptsteuervorrichtung hierzu entsprechend angesteuert werden.Mittels der vorstehend genannten Aspekte kann eine modularere und besser skalierbare Systemarchitektur des Kommunikationssystems erzielt werden.

Die Hauptsteuervorrichtung kann in einer Ausführungsform keine analogen Eingänge und keine analogen Ausgänge aufweisen.

In einer weiteren Ausführungsform weist die mindestens eine Nebenbetriebskomponente eine Nebenbetriebskomponente auf, die mit der Hauptsteuervorrichtung nach dem Master-Slave-Prinzip gekoppelt ist, derart, dass die Nebenbetriebskomponente eingerichtet ist, Daten zu ihrem Betriebszustand an die Hauptsteuervorrichtung zu senden und Steuersignale von der Hauptsteuervorrichtung zu empfangen. Alle Nebenbetriebskomponenten können mit der Hauptsteuervorrichtung nach dem Master-Slave-Prinzip gekoppelt sein.

In einer weiteren Ausführungsform weist die mindestens eine Nebenbetriebskomponente eine Nebenbetriebskomponente auf, die ausgebildet ist, eine Sicherheitsfunktion im Sinne der funktionalen Sicherheit ausfüllen und/oder bei Vorliegen einer sicherheitskritischen Situation die Ansteuerung der landwirtschaftlichen Maschine oder mindestens eines Aktors der landwirtschaftlichen Maschine, der eine sicherheitsrelevante Bewegung im Sinne der funktionalen Sicherheit ausführt, im Rahmen einer Vorrangsteuerung in einen sicheren Betriebszustand im Sinne der funktionalen Sicherheit zu überführen. Hierdurch können Verwaltungs- und Dokumentationsaufwände reduziert werden, denn diese fallen durch die Kapselung der Funktionalität in Form einer eigenen Nebenbetriebskomponente nur an, wenn Änderungen an dieser Nebenbetriebskomponente erforderlich sich, nicht jedoch an den anderen Nebenbetriebskomponenten oder der Hauptsteuervorrichtung, wenn diese keine Sicherheitsfunktionen im Sinne der funktionalen Sicherheit implementieren.

In einer weiteren Ausführungsform kann das Kommunikationssystem einen Netzwerkverteiler des Ethernet-Datennetzes aufweisen, der durch eine Nebenbetriebskomponente ausgebildet ist. Dies bietet den Vorzug, dass die Anzahl an Netzwerknoten erhöht werden kann, da diese nicht durch die Anzahl an geräteseitig bereitgestellten Ethernet-Schnittstellen der Hauptsteuervorrichtung beschränkt ist. Alternativ oder zusätzlich kann ein Netzwerkverteiler des Ethernet-Datennetzes in die Hauptsteuervorrichtung integriert sein oder der Netzwerkverteiler oder eine Funktion als Netzwerk-Switch kann als zusätzliche Funktion in eine oder mehrere der Nebenbetriebskomponenten integriert sein.

In einer weiteren Ausführungsform weist die mindestens eine Nebenbetriebskomponente eine Nebenbetriebskomponente auf, die nur mittelbar über mindestens eine weitere Nebenbetriebskomponente mit der Hauptsteuervorrichtung über das Ethernet-Datennetz in Kommunikationsverbindung steht. Dadurch kann die Komplexität des Kommunikationssystems verringert werden, insbesondere falls eine Nebenbetriebskomponente nur von einer weiteren Nebenbetriebskomponente angesteuert wird.

In einer weiteren Ausführungsform weist die mindestens eine Nebenbetriebskomponente eine Nebenbetriebskomponente auf, die zumindest eine der folgenden Datenkommunikationsschnittstellen aufweist: eine CAN- Schnittstelle, eine ISOBUS-Schnittstelle, und eine LIN - Schnittstelle. Dies bietet den Vorteil, dass die Nebenbetriebskomponente wahlweise über Ethernet oder über eine andere Datenschnittstelle kommunikationstechnisch angeschlossen hat, was die Integration von sog. bestehenden Komponenten (Legacy-Komponenten), z. B. auf ISOBUS-Basis, erleichtert. Ein weiterer Vorteil ist, dass an die Nebenbetriebskomponente eine oder mehrere Nebenbetriebskomponenten angeschlossen werden können, die keine Ethernet-Schnittstelle aufweisen. Diese Nebenbetriebskomponenten ohne Ethernet-Schnittstelle werden in diesem Dokument als zweite Nebenbetriebskomponenten bezeichnet, zur besseren Unterscheidung von Nebenbetriebskomponenten mit Ethernet-Schnittstellen.

Entsprechend kann das Kommunikationssystem ferner zumindest eine zweite Nebenbetriebskomponenten aufweisen, die keine Ethernet-Schnittstelle aufweist, jedoch stattdessen zumindest eine der folgenden Datenkommunikationsschnittstellen aufweist: eine CAN-Datenbus-Schnittstelle, eine ISOBUS-Schnittstelle und eine LIN-Schnittstelle.

Derartige zweite Nebenbetriebskomponenten können mit der Hauptbetriebskomponente direkt über eine CAN-Datenbus, ISOBUS, und/oder LIN-Bus kommunikationstechnisch verbunden sein. Alternativ können derartige zweite Nebenbetriebskomponenten in Kommunikationsverbindung mit einer Nebenbetriebskomponente, die eine Ethernet-Schnittstelle und mindestens eine CAN-, ISOBUS- oder LIN-Schnittstelle aufweist, in Kommunikationsverbindung stehen, die wiederum über ihre Ethernet-Schnittstelle in Kommunikationsverbindung mit der Hauptsteuervorrichtung steht. Die zweite Nebenbetriebskomponente steht in dieser Variante somit nur mittelbar mit der Hauptsteuervorrichtung in Kommunikationsverbindung.

Auf diese Weise können vorteilhaft "Legacy"-Komponenten, d. h. Komponenten, die über keine Ethernet-Schnittstelle verfügen, in das Kommunikationssystem integriert werden
In einer weiteren Ausführungsform ist das Kommunikationssystem ausgebildet, Positionsinformationen von einer Positionsbestimmungsvorrichtung, vorzugsweise von einer GNSS (globales Navigationssatellitensystem)-Positionsbestimmungsvorrichtung, zu empfangen, wobei die Positionsbestimmungsvorrichtung dazu ausgebildet ist, eine aktuelle Position der landwirtschaftlichen Maschine zu bestimmen. Die Positionsbestimmungsvorrichtung kann eine oder mehrere GNSS-Antennen, vorzugsweise GPS-Antennen, umfassen. Hierbei ist es möglich, dass die Hauptsteuervorrichtung und/oder eine oder mehrere der Nebenbetriebskomponenten mit der Positionsbestimmungsvorrichtung funktional gekoppelt sind, d. h. mit dieser in Signalverbindung stehen oder bringbar sind, so dass von der Positionsbestimmungsvorrichtung Positionsinformationen (Positionssignale) zur Hauptsteuervorrichtung und/oder zu den entsprechenden Nebenbetriebskomponenten übertragen werden können.

Hierbei ist es ferner möglich, dass die Hauptsteuervorrichtung zur Steuerung von einem An- und Abschalten von Verteil- und/oder Bearbeitungsprozessen in Abhängigkeit von den empfangenen Positionsinformationen ausgebildet ist. Alternativ oder zusätzlich kann die mindestens eine Nebenbetriebskomponente eine Nebenbetriebskomponente aufweisen (oder mehrere), die zur Steuerung von einem An- und Abschalten von Verteil- und/oder Bearbeitungsprozessen in Abhängigkeit von den empfangenen Positionsinformationen ausgebildet ist. Das An- und Abschalten ist vorzugsweise ein positionsgenaues An- und Abschalten.

Alternativ oder zusätzlich kann die Hauptsteuervorrichtung und/oder eine oder mehrere der Nebenbetriebskomponenten zur Steuerung von einem manuellen An- und Abschalten von Verteil- und/oder Bearbeitungsprozessen in Abhängigkeit von einer Benutzereingabe ausgebildet sein und in Signalverbindung mit einer Eingabeeinrichtung zur Erfassung der Benutzereingabe stehen und/oder bringbar sein.

Eine Reaktionszeit zur jeweiligen Signalübertragung zur Steuerung des An- und Abschaltens von Verteil- und/oder Bearbeitungsprozessen, wie vorstehend beschrieben, kann durch die Ethernet-basierte Kommunikation des Kommunikationssystems wesentlich beschleunigt werden.

Bei den Komponenten der landwirtschaftlichen Maschine, die an- und abgeschaltet werden, kann es sich um Spritzdüsen, Dosiereinrichtungen und/oder dergleichen handeln. Entsprechend diesem Aspekt kann die Hauptsteuervorrichtung und/oder die Nebenbetriebskomponente zur Steuerung des An- und Abschaltens von Verteil- und/oder Bearbeitungsprozessen ausgebildet sein, Spritzdüsen zur Ausbringung eines flüssigen Wirkstoffes und/oder Dosiereinrichtungen zur Ausbringung eines granularen Verteilguts anzusteuern.

In einer weiteren Ausführungsform kann das Kommunikationssystem ein Künstliches-Intelligenz-Modul, KI-Modul, auch als KI-Baustein bezeichnet, aufweisen. Beispielsweise kann das KI-Modul Bestandteil der Hauptsteuervorrichtung sein. Das KI-Modul kann insbesondere eingerichtet sein, Daten von Kameras (z. B. Pflanzendetektion, Personenerkennung, etc.) oder sonstiger Sensorik zur Umfeldüberwachung zu verarbeiten, insbesondere auszuwerten, wobei das KI-Modul hierzu Methoden des maschinellen Lernens, vorzugsweise mittels eines künstlichen neuronalen Netzes, verwendet.

In einer weiteren Ausführungsform kann das Kommunikationssystem ferner ein Überwachungsmodul aufweisen, das Bestandteil der Hauptsteuervorrichtung ist oder mit dieser in Signalverbindung steht, und ausgebildet ist, Umfelddaten von mindestens einer Kamera zur Umfelderfassung und/oder von Umfeldsensoren zu empfangen und zur Umfeldüberwachung zu verarbeiten.

In einer vorteilhaften Ausführungsvariante hiervon ist das Überwachungsmodul als ein Künstliches-Intelligenz-Modul, KI-Modul, ausgeführt, das zur Umfeldüberwachung die Umfelddaten mittels Methoden des maschinellen Lernens, vorzugsweise mittels eines künstlichen neuronalen Netzes auswertet. Beispielsweise kann das Überwachungsmodul Bilddaten einer an der landwirtschaftlichen Maschine angeordneten Kamera zur Umfelderfassung erhalten und die Auswahleinrichtung ausgebildet sein, ein von der Kamera erfasstes digitales Bild zu erhalten und mittels KI-basierter Bilderkennung auswerten, um Hindernisse, Pflanzenreihen, Fahrspuren und/oder andere Objekte zu erkennen, die zur landwirtschaftlichen Boden- oder Pflanzenbehandlung wichtig sind.

Derartige KI-Techniken und Algorithmen zur KI-basierter Objekterkennung anhand von Bilddaten sind auch dem Stand der Technik wohlbekannt. Als Trainingsdaten können z. B. Daten verwendet werden, die mittels der landwirtschaftlichen Maschine bei Test-Überfahrten von landwirtschaftlichen Flächen durch die Kamera erzeugt werden, und bei denen die mittels KI-basierter Objekterkennung zu erkennenden Objekte jeweils manuell klassifiziert sind, um das KI-Modul zu trainieren.

Ein zweiter allgemeiner Gesichtspunkt der Erfindung betrifft eine landwirtschaftliche Maschine, die ein Kommunikationssystem wie in diesem Dokument beschrieben aufweist. Die landwirtschaftliche Maschine kann eine landwirtschaftliche Maschine zur landwirtschaftlichen Boden- oder Pflanzenbehandlung sein, beispielsweise eine landwirtschaftliche Verteilmaschine, wie beispielsweise eine Feldspritze, ein pneumatischer Düngerstreuer oder eine Sämaschine, sein. Die landwirtschaftliche Maschine kann ferner landwirtschaftliche Bodenbearbeitungsmaschine sein.

Die landwirtschaftliche Maschine zur landwirtschaftlichen Boden- oder Pflanzenbehandlung kann als gezogenes Anbaugerät ausgebildet sein.

Die landwirtschaftliche Maschine kann ferner ein landwirtschaftliches Nutzfahrzeuggespann sein, aufweisend eine Zugmaschine, die als Traktor ausgeführt ist und ein gezogenes Anbaugerät. Hierbei kann der Traktor ein von dem gezogenen Anbaugerät unterschiedliches Kommunikationssystem aufweisen, beispielsweise kann in einer Ausführungsvariante nur das gezogene Anbaugerät ein Kommunikationssystem, wie es in diesem Dokument beschrieben ist, aufweisen. Mit anderen Worten kann in einer Ausführungsform das erfindungsgemäße Kommunikationssystem ausschließlich in dem gezogenen Anbaugerät, beispielsweise einer gezogenen Verteilmaschine, implementiert sein.

In einer weiteren Ausführungsvariante kann das landwirtschaftliche Nutzfahrzeuggespann eine autonome Zugmaschine aufweisen, sowie ein gezogenes Arbeitsgerät zur landwirtschaftlichen Boden- oder Pflanzenbehandlung. Mittels der autonomen Zugmaschine kann eine autonome Navigation des Nutzfahrzeuggespanns auf einer landwirtschaftlichen Nutzfläche realisiert werden.

Hierbei kann das landwirtschaftliche Nutzfahrzeuggespann ein Kommunikationssystem aufweisen, wie es in diesem Dokument beschrieben ist, wobei die Hauptsteuervorrichtung des Kommunikationssystems ausschließlich an der Zugmaschine oder an dem gezogenen Arbeitsgerät angeordnet ist und die mindestens eine Nebenbetriebskomponente kann Nebenbetriebskomponenten umfassen, die am Zugfahrzeug angeordnet sind und Nebenbetriebskomponenten umfasst, die an dem gezogenen Arbeitsgerät angeordnet sind.

Alternativ kann hierbei das landwirtschaftliche Nutzfahrzeuggespann zwei erfindungsgemäße Kommunikationssysteme aufweisen, wobei ein erstes Kommunikationssystem der Zugmaschine räumlich und funktional zugeordnet ist und ein zweites Kommunikationssystem dem gezogenen Arbeitsgerät räumlich und funktional zugeordnet ist.

In weiteren Ausführungsvarianten kann das landwirtschaftliche Nutzfahrzeuggespann, welches eine autonome Zugmaschine aufweist, folgende weiteren, jeweils optionalen Aspekte aufweisen:
Das Nutzfahrzeuggespann kann ein Gelenk aufweisen, das die Zugmaschine mit dem Arbeitsgerät gelenkig verbindet; eine Lenkaktorvorrichtung, mittels der eine Stellung des Gelenks zum Lenken des Nutzfahrzeuggespanns anpassbar ist; eine Positionsbestimmungsvorrichtung, vorzugsweise GNSS-Positionsbestimmungsvorrichtung, wobei die Positionsbestimmungsvorrichtung dazu ausgebildet ist, eine aktuelle Position des Nutzfahrzeuggespanns zu bestimmen; und eine Steuereinheit, die dazu konfiguriert ist, die Lenkaktorvorrichtung in Abhängigkeit von einer vorgegebenen Fahrtroutenlinie und der bestimmten aktuellen Position zu betreiben.

Vorzugsweise kann die vorgegebene Fahrtroutenlinie mehrere parallele, nacheinander zu befahrende Bahnen aufweisen, wobei zumindest jeweils zwei benachbarte Bahnen endseitig mittels eines Vorgewendes miteinander verbunden sind. Die Bahnen können zumindest abschnittsweise geradlinig und/oder zumindest abschnittsweise gebogen sein.

Das Arbeitsgerät kann zwischen einer Arbeitsstellung und einer Transportstellung bewegbar sein. Das Arbeitsgerät kann dabei in der Transportstellung entgegen einer Vorwärtsfahrtrichtung des Nutzfahrzeuggespanns über das Gelenk ragen. Vorzugsweise ragt das Arbeitsgerät in der Transportstellung entgegen der Vorwärtsfahrtrichtung zusätzlich über die Lenkaktorvorrichtung und/oder die Zugmaschine. Vorteilhaft kann das landwirtschaftliche Nutzfahrzeuggespann durch Ausnutzung eines Raums oberhalb des Gelenks für einen Abschnitt des Arbeitsgeräts eine besonders kompakte Transportstellung des Nutzfahrzeuggespanns ermöglichen, mit der das Nutzfahrzeuggespann bspw. über öffentliche Straßen bewegt werden kann. Die Ausnutzung des Raums oberhalb von dem Gelenk kann zudem ermöglichen, dass das Arbeitsgerät in der Arbeitsstellung eine große Arbeitsbreite aufweisen kann und/oder eine Konstruktion, die eine Wandlung des Arbeitsgeräts zwischen Arbeitsstellung und Transportstellung ermöglicht, vergleichsweise einfach aufgebaut werden kann, da bspw. weniger bewegbare Segmente vorgesehen werden müssen. Diese Vorteile können jeweils noch verstärkt werden, indem ein Raum oberhalb von der Lenkaktorvorrichtung und der Zugmaschine von dem Abschnitt des Arbeitsgeräts in der Transportstellung ausgenutzt wird.

Die erfindungsgemäße Realisierung der Hauptsteuervorrichtung als zentrales Steuergerät mit Ethernet-Schnittstelle bietet die Möglichkeit, die jeweilige Maschinenkonfiguration der im Rahmen einer Produktion hergestellten landwirtschaftlichen Maschine mittels beispielsweise einer Schnittstelle von einem ERP-System oder mittels einer Rechnereinheit einer Produktionslinie, z. B. Bandendetool, in die Hauptsteuervorrichtung zu übertragen.

Entsprechend betrifft ein dritter allgemeiner Gesichtspunkt der Erfindung ein Verfahren zur Herstellung einer landwirtschaftlichen Maschine, wie in diesem Dokument beschrieben. Das Verfahren umfasst hierbei die folgenden Schritte:
Herstellen einer landwirtschaftlichen Maschine mit einer bestimmen Maschinenkonfiguration, wobei eine in einem ERP-System oder einem Computer einer Produktionslinie zur Herstellung der landwirtschaftlichen Maschine hinterlegte Steuerungssoftware zur Steuerung der landwirtschaftlichen Maschine in Abhängigkeit von der bestimmten Maschinenkonfiguration ausgewählt und/oder parametrisiert wird und von dem ERP-System oder dem Computer der Produktionslinie in die Hauptsteuervorrichtung übertragen wird.

Auf diese Weise kann die zum Betrieb der landwirtschaftlichen Maschine benötigte Software im Rahmen des Herstellungsprozesses schnell und einfach auf die entsprechende Hardware übertragen werden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Perspektivansicht einer landwirtschaftlichen Maschine mit einem Kommunikationssystem gemäß einer Ausführungsform der Erfindung;
- Figur 2: eine schematische Darstellung eines Kommunikationssystems gemäß einer Ausführungsform der Erfindung; und
- Figur 3: eine perspektivische Ansicht eines landwirtschaftlichen Nutzfahrzeuggespanns mit einem Arbeitsgerät in einer Arbeitsstellung gemäß einem Ausführungsbeispiel der vorliegenden Offenbarung.

Gleiche oder funktional äquivalente Elemente sind in allen Figuren mit denselben Bezugszeichen bezeichnet und zum Teil nicht gesondert beschrieben.

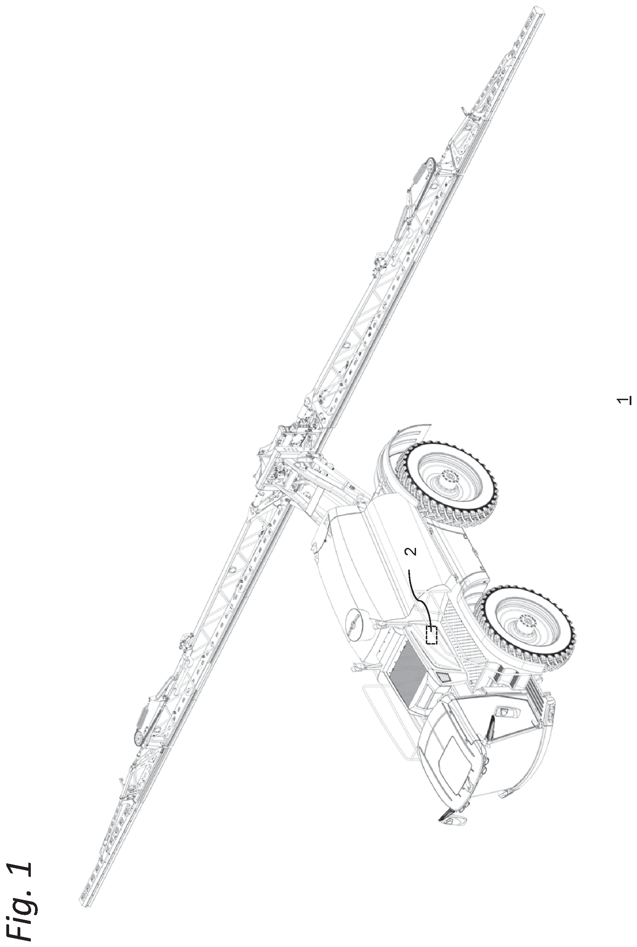

Figur 1 zeigt eine Perspektivansicht einer landwirtschaftlichen Maschine mit einem Kommunikationssystem 2 gemäß einer Ausführungsform der Erfindung. Die landwirtschaftliche Maschine ist hier lediglich beispielhaft eine selbstfahrende landwirtschaftliche Feldspritze.

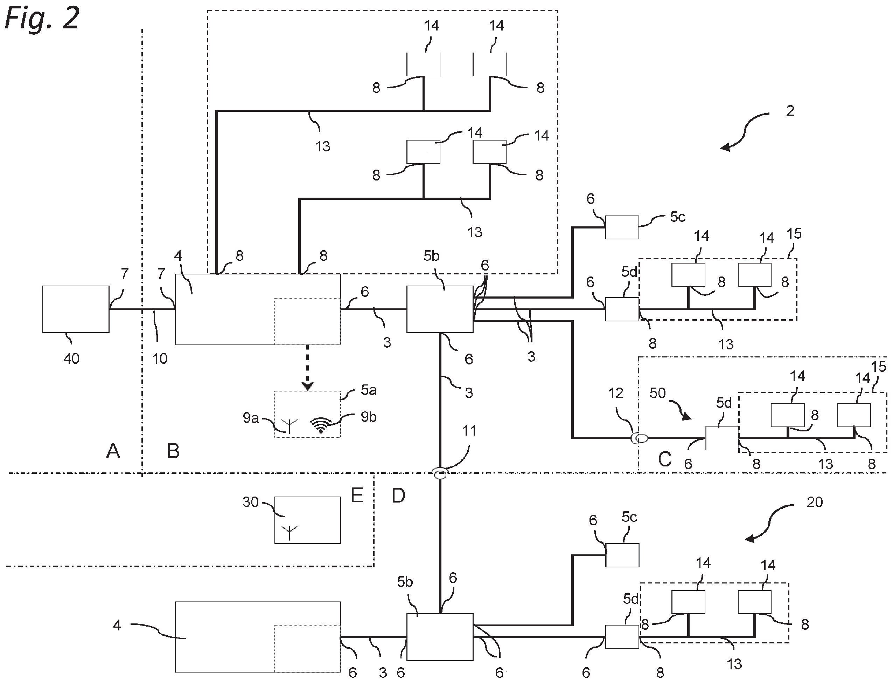

Figur 2 zeigt eine schematische Darstellung eines Kommunikationssystems 2 gemäß einer Ausführungsform der Erfindung.

In Figur 2 sind beispielhaft fünf miteinander verbundene Kommunikationssysteme gezeigt, die nachfolgend noch detaillierter beschrieben werden. Die Systemgrenzen sind jeweils mit Strichpunktlinien illustriert, wobei die einzelnen Bereiche bzw. einzelnen Kommunikationssysteme durch die Buchstaben A bis E gekennzeichnet sind.

Eine landwirtschaftliche Maschine 1 kann beispielsweise mit dem Kommunikationssystem 2, dargestellt im Bereich B, ausgestattet sein. Das Kommunikationssystem 2 umfasst ein Ethernet-Datennetz 3, das beispielsweise als ein 100BASE-TX, 1000BASE-T, 100BASE-T1, oder 1000BASE-T1 Ethernet ausgebildet sein kann. Das Kommunikationssystem 2 umfasst ferner eine Hauptsteuervorrichtung 4, die als zentrale Rechen- und Steuereinheit zur Steuerung von Maschinenfunktionen, wie vorzugsweise dem positionsgenauen An- und Abschalten von Verteil- und/oder Bearbeitungsprozessen, ausgebildet ist. Die Hauptsteuervorrichtung 4 umfasst mehrere unterschiedliche Datenkommunikationsschnittstellen. Diese umfassen mindestens eine Ethernet-Schnittstelle 6 zum Anschluss an ein Ethernet-Datennetz 3, eine CAN-Schnittstelle 8 zum Anschluss an einen CAN-Datenbus 13 und eine ISOBUS-Schnittstelle 7 zum Anschluss an einen ISOBUS-Datenbus 10. Die Hauptsteuervorrichtung 4 kann ferner eine LIN-Schnittstelle (nicht dargestellt) aufweisen zum Anschluss an einen LIN-Bus.

Das Kommunikationssystem 2 umfasst ferner mehrere Nebenbetriebskomponenten 5, die mindestens eine Ethernet-Schnittstelle 6 aufweisen und unterschiedliche Funktionen ausführen können und je nach Funktion durch die Bezugszeichen 5a bis 5d (anstatt mit dem Bezugszeichen 5) referenziert werden. Die Hauptsteuervorrichtung 4 steuert über das Ethernet-Datennetz 3 mehrere der angeschlossenen Nebenbetriebskomponenten 5 an. Diese Ansteuerung kann nach dem Master-Slave-Prinzip erfolgen, wobei die Hauptsteuervorrichtung die Funktion des Masters und die Nebenbetriebskomponenten die Funktion der Slaves ausüben.

Sowohl die Hauptsteuervorrichtung 4 als auch die Nebenbetriebskomponenten 5 bzw. 5a bis 5d sind somit an das Ethernet-Datennetz 3 angeschlossen und weisen hierzu jeweils mindestens eine Ethernet-Schnittstelle 6 zum Anschluss an das Ethernet-Datennetz 3 auf. Die Ethernet-Schnittstelle 6 dient als Datenkommunikationsschnittstelle zum Senden und/oder Empfangen von Daten über das Ethernet-Datennetz 3, z. B. bei einer Steuerung von Maschinenfunktionen.

Das Kommunikationssystem 2 umfasst ferner mehrere zweite Nebenbetriebskomponenten 14, die über ein CAN-Datennetz 13 entweder direkt in Kommunikationsverbindung mit der Hauptsteuervorrichtung 4 stehen oder über ein CAN-Datennetz 13 in Kommunikationsverbindung mit einer der Nebenbetriebskomponenten 5d stehen, die sowohl eine Ethernet-Schnittstelle 6 als auch eine CAN-Schnittstelle 8 aufweisen. Die zweiten Nebenbetriebskomponenten 14 müssen keine Ethernet-Schnittstelle aufweisen. Alternativ zu der CAN-Schnittstelle 8 können eine oder mehrere der zweiten Nebenbetriebskomponenten 14 eine LIN-Schnittstelle aufweisen.

In Figur 2 sind durch die gestrichelten Linien zwei solche CAN-Datenbus-basierte Subsysteme 15 aus zweiten Nebenbetriebskomponenten 14 dargestellt, die Teil des Kommunikationssystems 2 sind (dargestellt im Bereich B). Hierbei kann es sich um herkömmliche Steuergeräte und/oder Jobrechner handeln, die noch nicht auf den Ethernet-Standard umgestellt wurden und somit vorteilhaft in eine neue Ethernet-Systemarchitektur integriert werden können.

Die Hauptsteuervorrichtung 4 ist ein Rechner, auf dem als Betriebssystem Unix oder ein Unix-Derivat installiert ist, vorzugsweise Linux. Die Nebenbetriebskomponenten 5 und die zweiten Nebenbetriebskomponenten 14 können ihre Funktion oder Betriebsfunktion in Abhängigkeit von Steuerdaten der Hauptsteuervorrichtung 4 durchführen oder zum Teil auch eigenständig durchführen. Die Hautsteuervorrichtung 4 dient somit als zentrale Steuerung des Arbeitsbetriebs der landwirtschaftlichen Maschine und steuert hierzu zumindest einen Teil der Nebenbetriebskomponenten 5 und der zweiten Nebenbetriebskomponenten 14 an. Die Hauptsteuervorrichtung dient somit vorliegend als "Hochleistungsrechner", der verschiedene Nebenbetriebskomponenten steuern kann, und könnte im Prinzip auch auf einem handelsüblichen leistungsfähigen PC auf Linux-Basis installiert werden.

Die Hauptsteuervorrichtung 4 weist, wie vorstehend bereits erwähnt, neben den Ethernet-Schnittstellen weitere Datenkommunikationsschnittstellen auf. In der in Figur 2 gezeigten Ausführungsform ist dies eine ISOBUS-Schnittstelle 7, über die ISOBUS-kompatible Komponenten angebunden werden können. Über die ISOBUS-Schnittstelle 7 ist vorliegend ein ISOBUS-basiertes Kommunikationssystem 40 (gezeigt im Bereich A der Figur 2) eines weiteren landwirtschaftlichen Nutzfahrzeugs, z. B: einem Traktor, angebunden. Falls z. B. das Kommunikationssystem 2 in einer landwirtschaftlichen Maschine installiert ist, die von einer weiteren landwirtschaftlichen Maschine gezogen wird, wie einem Traktor, kann z. B. über die ISOBUS-Schnittstelle 7 das Ethernet-basierte Kommunikationssystem 2 mit einem ISOBUS-Datenbus 10 und darüber mit dem Bedienterminal (VT) des Traktors verbunden werden.

Das Kommunikationssystem 2 umfasst ferner eine Mobilfunkschnittstelle 9a und eine Drahtlos-Nahbereichsverbindungs-Schnittstelle, beispielsweise eine WLAN-Schnittstelle 9b. Die Drahtlos-Schnittstellen 9a und 9b sind hier nicht in die Hauptsteuervorrichtung 4 integriert, was jedoch alternativ möglich ist, sondern werden durch eine Nebenbetriebskomponente 5a bereitgestellt. Die Drahtlos-Schnittstellen 9a, 9b werden somit abgesetzt in der dedizierten Nebenbetriebskomponente 5a bereitgestellt, wobei die Nebenbetriebskomponente 5a in Kommunikationsverbindung mit der Hauptsteuervorrichtung 4 steht, z. B. über eine Ethernet-Verbindung oder auch drahtlos (dargestellt durch den gestrichelten Pfeil). Vorzugsweise wird der gesamte Drahtlos-Datenverkehr des Kommunikationssystems 2 mit externen Einheiten über die Drahtlos-Schnittstellen 9a und 9b realisiert.

So kann beispielsweise eine externe Drahtlos-Komponente 30, z. B. ein Tablet-Computer, angebunden werden, die im Teilbereich E der Figur 2 dargestellt ist.

Mit dem Bezugszeichen 5b ist eine weitere Nebenbetriebskomponente 5b des Kommunikationssystems 2 bezeichnet, die als Netzwerkverteiler des Ethernet-Datennetzes 3 fungiert, der durch eine Nebenbetriebskomponente 5b ausgebildet ist oder in die Hauptsteuervorrichtung integriert ist. Mit dem Bezugszeichen 5c und 5d sind Nebenbetriebskomponenten bezeichnet, die als Ein- und Ausgangsmodule ausgebildet sind, sog. I/O-Module. Derartige I/O-Module weisen eine oder mehrere verschiedene Kommunikationsschnittstellen auf. Zudem hat ein I/O-Modul typischerweise analoge und digitale Ein- und Ausgänge, z. B. Eingänge zum Anschluss von Sensoren und Ausgänge zum Anschluss von Aktoren, die für die landwirtschaftlichen Arbeitsprozesse gesteuert werden sollen. Bei den zweiten Nebenbetriebskomponenten 14 handelt es sich ebenfalls um solche I/O-Module auf CAN-Basis.

Die Hauptsteuervorrichtung 4 zeichnet sich somit im Vergleich zu üblichen Jobrechnern dadurch aus, dass an der Hauptsteuervorrichtung 4 direkt insbesondere keine Sensorik, Aktorik oder dergleichen angeschlossen wird. Dies erfolgt stattdessen an separaten Netzwerknoten, den Nebenbetriebskomponenten 5c, 5d oder den zweiten Nebenbetriebskomponenten 14. Alternativ oder zusätzlich ist es auch möglich, dass eine oder mehrere der zweiten Nebenbetriebskomponenten 14 selbst als netzwerkfähiger Sensor und/oder Aktor ausgebildet ist und in Kommunikationsverbindung mit der Hauptsteuervorrichtung 4 steht. Die Nebenbetriebskomponenten 5d unterscheiden sich von den Nebenbetriebskomponenten 5c dadurch, dass diese eine CAN-Schnittstelle 8 aufweisen, an der zweite Nebenbetriebskomponenten angeschlossen sind.

Eine oder mehrere der Nebenbetriebskomponenten 5 bzw. 5c oder 5d oder der zweiten Nebenbetriebskomponenten 14 können ausgebildet sein, eine Sicherheitsfunktion im Sinne der funktionalen Sicherheit bereitzustellen. Diese Komponenten können z. B. das Vorliegen einer sicherheitskritischen Situation erkennen, z. B. anhand bestimmter Sensorwerte, und bei Vorliegen einer sicherheitskritischen Situation die Ansteuerung der landwirtschaftlichen Maschine oder mindestens eines Aktors der landwirtschaftlichen Maschine, der eine sicherheitsrelevante Bewegung im Sinne der funktionalen Sicherheit ausführt, im Rahmen einer Vorrangsteuerung in einen sicheren Betriebszustand im Sinne der funktionalen Sicherheit überführen.

Mit der in Figur 2 beschriebenen Systemarchitektur des Kommunikationssystems 2 können flexibel weitere Systeme angebunden werden. Beispielsweise kann an das Kommunikationssystem 2 ein Kommunikationssystem 50 einer nicht eigenständig betreibbaren landwirtschaftlichen Landmaschine angebunden werden, vgl. Abschnitt C der Figur 2.

Das Kommunikationssystem 50 enthält keine eigene Hauptsteuervorrichtung, sondern lediglich eine Nebenbetriebskomponente 5d mit einer Ethernet-Schnittstelle 6 zum Anschluss an das Kommunikationssystem 2 und einer CAN-Schnittstelle 8, an der wiederum ein Subsystem aus mehreren zweiten Nebenbetriebskomponenten 14 mit CAN-Schnittstellen 8 des Kommunikationssystems 50 angeschlossen sind. Das Kommunikationssystem 2 weist eine Schnittstelle 12 auf, die z. B. in Form einer Buchse bereitgestellt werden kann, um das Kommunikationssystem 50 der nicht eigenständig betreibbaren landwirtschaftlichen Landmaschine anzuschließen, so dass die nicht eigenständig betreibbare landwirtschaftliche Landmaschine bzw. deren Nebenbetriebskomponenten über das angeschlossene Kommunikationssystem 50 von der Hauptsteuervorrichtung 4 gesteuert werden können.

Über eine weitere Schnittstelle 11 kann beispielsweise eine im Prinzip auch eigenständig betreibbare Landmaschine bzw. deren Kommunikationssystem 20, dargestellt in Teilbereich D der Figur 2, an das Ethernet-Datennetz 3 und das Kommunikationssystem 2 angeschlossen werden. Das Kommunikationssystem 20 der Fremdmaschine weist nunmehr ebenfalls eine Hauptsteuervorrichtung 4, mehrere Nebenbetriebskomponenten 5 mit Ethernet-Schnittstellen und mehrere zweite Nebenbetriebskomponenten 14 mit CAN-Schnittstelle 8 auf. Es können somit zwei erfindungsgemäße Kommunikationssysteme 2 und 20 zusammengeschaltet werden, um z. B. Daten zwischen zwei landwirtschaftlichen Maschinen auszutauschen und um z. B. gemeinsame Arbeitsvorgänge zu koordinieren.

Vorstehend wurde bereits festgestellt, dass die Nebenbetriebskomponenten 5 oder ein Teil der Nebenbetriebskomponenten 5 neben der Ethernet-Schnittstelle 6 eine CAN-Schnittstelle 8 aufweisen können (dargestellt durch die Nebenbetriebskomponenten 5d in Figur 2). Alternativ oder zusätzlich zu der CAN-Schnittstelle 8 können die Nebenbetriebskomponenten z. B. eine ISOBUS-Schnittstelle oder eine LIN-Bus-Schnittstelle aufweisen.

Die Hauptsteuervorrichtung 4 kann optional ausgebildet sein, zentral auf alle Datenkommunikationsschnittstellen 6, 7, 9a, 9b und 13 im Kommunikationssystem 2 zur Ablaufverfolgung (engl. tracing) und/oder zum Logging zuzugreifen und die darüber erfassten Daten zu Diagnosezwecken bereitzustellen. Eine entsprechendes Tracing oder Logging kann unter Verwendung von standardisierten Programmbibliotheken für Unix- bzw. Linux-System implementiert werden.

Die Hauptsteuervorrichtung 4 ist hardwareseitig mit einem Mehrprozessorkern ausgestattet und/oder mit mindestens zwei separat programmierbaren CPUs. Zur Nutzung der mehreren Prozessorkerne weist die Hauptsteuervorrichtung 4 mehrere Prozessorkerne unterschiedlicher Art auf, d.h., die Funktionalität der Hauptsteuervorrichtung 4 ist unterteilt in Teilfunktionalitäten, die jeweils softwareseitig so implementiert sind, dass sie jeweils von unterschiedlichen Prozessorkernen hardwareseitig ausgeführt werden. Beispielsweise kann die Hauptsteuervorrichtung 4 einen eigenen "Safety-Kern" aufweisen, der Sicherheitsfunktionen der landwirtschaftlichen Maschine bündelt, vorzugsweise Sicherheitsfunktionen im Sinne der funktionalen Sicherheit. Ferner kann ein Echtzeitkern vorgesehen sein, der zeitkritischen Funktionen ausführt. Der Echtzeitkern kann auf einer separaten CPU mit einem Echtzeitbetriebssystem (engl. RTOS) implementiert werden. Der Echtzeitkern kann ausgebildet sein, ausgewählte Maschinenfunktionen der landwirtschaftlichen Maschine in Echtzeit oder im Wesentlichen ohne Latenz zu steuern. In einer besonders vorteilhaften Ausführungsform ist der Sicherheitskern als Echtzeitkern implementiert. Dies ermöglicht eine Echtzeit-Ausführung von Sicherheitsfunktionen.

Ein auf Ethernet-Basis realisiertes Kommunikationssystem 2 mit einer auf Unix oder einem Unix-Derivat implementierten Hauptsteuervorrichtung 4 bietet ferner den Vorteil, dass bei der Herstellung der landwirtschaftlichen Maschinen die der jeweiligen Maschinenkonfiguration zugeordnete Steuerungssoftware, die auf der Hardware der Hauptsteuervorrichtung 4 implementiert werden soll, mittels beispielsweise einer Schnittstelle von einem Enterprise-Resource-Planning, ERP,-System oder mittels einer Rechnereinheit einer Produktionslinie (z. B. Bandendetool) in die Hauptsteuervorrichtung 4 übertragen werden kann.

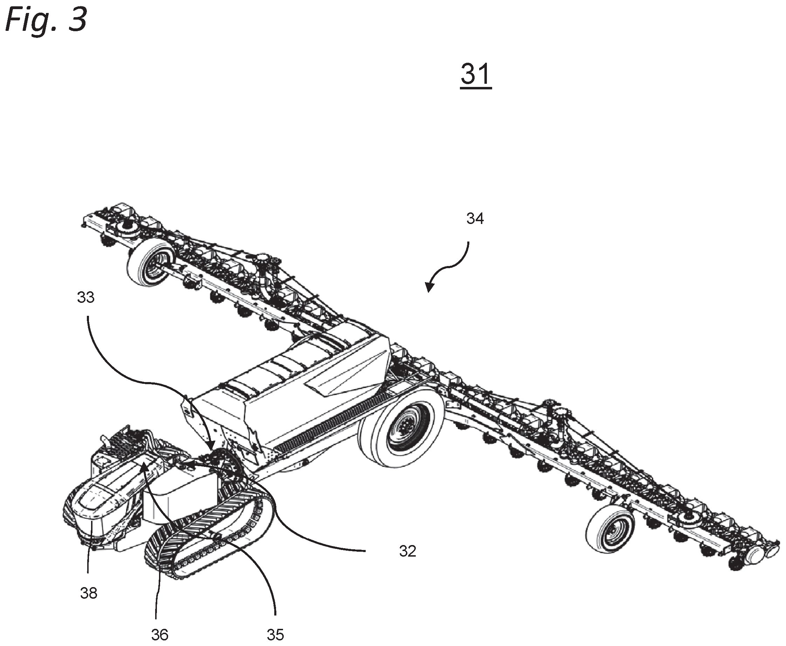

Die Figur 3 zeigt ein landwirtschaftliches Nutzfahrzeuggespann 31. Das landwirtschaftliche Nutzfahrzeuggespann 31 weist einen autonom betreibbaren Triebkopf bzw. eine autonom betreibbare Zugmaschine 32 und ein von der Zugmaschine 32 gezogenes Arbeitsgerät 34 auf. Es ist möglich, dass das Arbeitsgerät 34 von der Zugmaschine 32 abkoppelbar ist, z. B. zum Ankoppeln eines anderen Arbeitsgeräts an die Zugmaschine 32. Die Zugmaschine 32 ist bevorzugt ohne Fahrerstand bzw. Fahrerkabine / Fahrerhaus ausgebildet. Die Zugmaschine 32 ist autonom ohne Fahrer betreibbar. Die Zugmaschine 32 kann Fortbewegungselemente bzw. Traktionselemente 36 und eine Umgebungserfassungssensorik 38 aufweisen.

Die Fortbewegungselemente 16 können bspw. als Gleiskettenantrieb bzw. Raupenantriebe ausgeführt sein, wie in den Figuren dargestellt ist. Der Übersicht halber ist in den Figuren lediglich die Gleiskette bzw. Raupenkette dargestellt, ohne bspw. ein Antriebsrad oder ein Umlenkrad darzustellen. Die Zugmaschine 12 kann einen Antriebsstrang aufweisen, der die Fortbewegungselemente 16 antreibt. Der Antriebsstrang kann bspw. einen verbrennungsmotorischen, elektromotorischen oder dieselelektrischen Antrieb aufweisen. Andere Antriebskonzepte sind ebenfalls denkbar.

Die Umgebungserfassungssensorik 18 ist zur Ermittlung bzw. Erfassung von im Umfeld des landwirtschaftlichen Nutzfahrzeuggespanns 10 vorhandenen Hindernissen und/oder Elementen ausgebildet. Die Umgebungserfassungssensorik 18 kann hierbei derartig ausgeführt sein, dass diese eine Umgebung in Fahrtrichtung vor und optional neben der Zugmaschine 12 erfassen kann. Eine Erfassung der Umgebung kann bevorzugt über eine gesamte Arbeitsbreite des Arbeitsgeräts 14 erfolgen. Mittels der Umgebungserfassungssensorik 18 können bspw. Hindernisse wie Bäume, Büsche, andere pflanzliche Hindernisse und/oder Elemente u. dgl. erfasst werden, bevorzugt jedoch auch Lebewesen, wie Tiere und/oder Menschen.

Die Umgebungserfassungssensorik 38 kann bspw. einen Laserscanner und/oder ein Kamerasystem mit bspw. einer 3D-Wärmebildkamera aufweisen. Die Umgebungserfassungssensorik 38 kann alternativ oder zusätzlich mindestens eine 3D-Kamera und/oder mindestens einen 3D-Scanner und/oder mindestens ein 3D-Rig aufweisen. Die Umgebungserfassungssensorik 38 kann alternativ oder zusätzlich mindestens einen Infrarotsensor aufweisen. Es ist möglich, dass die Umgebungserfassungssensorik 38 mindestens zwei Umfeldsensoren aufweist. Bevorzugt können die zwei Umfeldsensoren zur Erfassung verschiedener Objekte ausgebildet sein. Bspw. können somit Signale von beiden Umfeldsensoren von einer Steuereinheit des landwirtschaftlichen Nutzfahrzeuggespanns 31 ausgewertet werden, z. B. als ein zusammengesetztes bzw. gemeinsames Bild oder allgemein in Form einer Auswertung einer Sensorfusion. Vorzugweise können die zwei Umfeldsensoren unterschiedliche physikalische Eigenschaften erfassen, aus denen anschließend bspw. eine Auswertung über eine Art eines erfassten Hindernisses bzw. Elements erfolgt. Die Art kann hierbei bspw. derart ausgewertet werden, dass eine Aussage darüber möglich ist, ob es sich beim erfassten Hindernis bzw. Element um ein Lebewesen (ja/nein), ein Tier (ja/nein), einen Menschen (ja/nein) usw. handelt. Es ist auch möglich, dass eine derartige Auswertung bereits mittels eines einzigen Umfeldsensors möglich ist, z. B. mit einer 3D-Kamera und entsprechenden Bilderkennungsalgorithmen.Das Arbeitsgerät 34 ist gelenkig mit der Zugmaschine 32 verbunden. Die gelenkige Verbindung weist ein Gelenk 33 auf. Das Gelenk 33 kann eine Drehung um eine Hochachse ermöglichen. Die Hochachse kann durch das Gelenk 33 verlaufen. Bei horizontaler Ausrichtung des Nutzfahrzeuggespanns 31 kann die Hochachse im Wesentlichen senkrecht zu einer Horizontalebene sein. Die Hochachse kann im Wesentlichen senkrecht zu einer Längsachse und zu einer Querachse des Nutzfahrzeuggespanns 31 (der Zugmaschine 32 bzw. des Arbeitsgeräts 34) sein. Bevorzugt weist das Gelenk 33 ein Schwenkgelenk, Knickgelenk und/oder Kreuzgelenk auf. Zum Lenken weist das Nutzfahrzeuggespann 31 eine Lenkaktorvorrichtung auf. Die Lenkaktorvorrichtung kann bspw. mindestens eine Kolben-Zylinder-Einheit aufweisen. Die Lenkaktorvorrichtung kann bspw. elektromagnetisch, hydraulisch oder pneumatisch betreibbar sein. Mittels der Lenkaktorvorrichtung kann eine Stellung des Gelenks 33 um dessen Hochachse zum Lenken des Nutzfahrzeuggespanns 31 anpassbar sein. Bspw. kann sich die Lenkaktvorrichtung einerseits an der Zugmaschine 32 und andererseits an dem Arbeitsgerät 34 abstützen. Das Nutzfahrzeuggespann 31 kann eine Positionsbestimmungsvorrichtung 35 aufweisen. Die Positionsbestimmungsvorrichtung 35 kann fortwährend eine aktuelle Position bzw. Ist-Position des Nutzfahrzeuggespanns 31 bestimmen. Bevorzugt ist die Positionsbestimmungsvorrichtung 35 eine GNSS (globales Navigationssatellitensystem) - Positionsbestimmungsvorrichtung, z. B. eine GPS-Positionsbestimmungsvorrichtung. Die Positionsbestimmungsvorrichtung 35 kann eine oder mehrere GNSS-Antennen, vorzugsweise GPS-Antennen, aufweisen. Die mindestens eine GNSS-Antenne kann an der Zugmaschine 32 (wie dargestellt), dem Arbeitsgerät 44 und/oder dem Gelenk 33 angeordnet sein. Bevorzugt ist die mindestens eine GNSS-Antenne bezüglich einer Querachse des Nutzfahrzeuggespanns 31 im Wesentlichen mittig an dem Nutzfahrzeuggespann 31 angeordnet.

Das Nutzfahrzeuggespann 31 weist ferner eine Steuereinheit (nicht dargestellt) auf. Vorzugsweise ist die Steuereinheit in der Zugmaschine 32 angeordnet. Mittels der Steuereinheit kann das Nutzfahrzeuggespann 31 autonom betrieben werden. Beispielsweise kann die Steuereinheit zum Betreiben des Nutzfahrzeuggespanns 31 in Kommunikationsverbindung mit dem Antrieb, der Bremsvorrichtung, der Kommunikationsschnittstelle, der Lenkaktorvorrichtung, und/oder einem Aktor des Arbeitsgeräts 34 sein, z. B. um Informationen zu empfangen und/oder Steuerbefehle auszugeben. Die Steuereinheit kann einen autonomen Betrieb des Nutzfahrzeuggespanns 31 ermöglichen. Beispielsweise kann die Steuereinheit das Nutzfahrzeuggespann 31 in einem ersten bzw. autonomen Betriebsmodus betreiben.

Das Nutzfahrzeuggespann 31 kann ein Kommunikationssystem 2, wie es vorstehend beschrieben ist, aufweisen. Hierbei kann die Hauptsteuervorrichtung 4 des Kommunikationssystems 2 ausschließlich an der Zugmaschine 32 oder dem gezogenen Arbeitsgerät 34 angeordnet sein. Die Nebenbetriebskomponenten 5 können dabei die Nebenbetriebskomponenten 5 umfassen, die am Zugfahrzeug 32 angeordnet sind und/oder diesem funktional zugeordnet sind und ferner Nebenbetriebskomponenten umfassen, die an dem gezogenen Arbeitsgerät 34 angeordnet sind und/oder diesem funktional zugeordnet sind.

Alternativ kann das landwirtschaftliche Nutzfahrzeuggespann 31 zwei Kommunikationssysteme 2 umfassen, wobei ein erstes Kommunikationssystem der Zugmaschine 32 räumlich und funktional zugeordnet ist und ein zweites Kommunikationssystem dem gezogenen Arbeitsgerät 34 räumlich und funktional zugeordnet ist.

Im Folgenden werden weitere Aspekte der Erfindung angegeben, die bevorzugte Ausführungsformen betreffen und Bestandteil der Offenbarung der vorliegenden Anmeldung sind:
Aspekt 1: Ein Kommunikationssystem (2) für eine landwirtschaftliche Maschine (1), umfassend eine Hauptsteuervorrichtung (4), die als zentrale Rechen- und Steuereinheit zur Steuerung von Maschinenfunktionen, wie vorzugsweise dem positionsgenauen An- und Abschalten von Verteil- und/oder Bearbeitungsprozessen, ausgebildet ist; mindestens eine Nebenbetriebskomponente (5), die ausgebildet ist, eine ihr zugeordnete Betriebsfunktion in Abhängigkeit von Steuerdaten der Hauptsteuervorrichtung (4) und/oder eigenständig durchzuführen, wobei die Hauptsteuervorrichtung (4) und die mindestens eine Nebenbetriebskomponente (5) jeweils mindestens eine Ethernet-Schnittstelle (6) zum Anschluss an ein Ethernet-Datennetz (3) aufweisen, zum Senden und/oder Empfangen von Daten über das Ethernet-Datennetz (3) bei einer Steuerung von Maschinenfunktionen.
Aspekt 2: Kommunikationssystem (2) nach Aspekt 1, wobei die Hauptsteuervorrichtung (4) zumindest eine der folgenden Datenkommunikationsschnittstellen aufweist: eine CAN-Datenbus-Schnittstelle (8), eine ISOBUS-Schnittstelle (7), eine Highspeed ISOBUS und eine Local Inter-connect Network-, LIN, -Bus-Schnittstelle.
Aspekt 3: Kommunikationssystem (2) nach den Aspekten 1 oder 2, ferner umfassend a) eine Mobilfunkschnittstelle (9a), und/oder b) mindestens eine Drahtlos-Nahbereichsverbindungs-Schnittstelle, beispielsweise eine WLAN- oder eine Bluetooth-Schnittstelle (9b), die in die Hauptsteuervorrichtung (4) integriert ist und/oder sind oder durch eine (5a) der mindestens einen Nebenbetriebskomponente (5) bereitgestellt wird und/oder werden.
Aspekt 4: Kommunikationssystem (2) nach einem der vorherigen Aspekte, wobei auf der Hauptsteuervorrichtung (4) als Betriebssystem Unix oder ein Unix-Derivat installiert ist, vorzugsweise Linux.
Aspekt 5: Kommunikationssystem (2) nach einem der vorherigen Aspekte, wobei die Hauptsteuer-vorrichtung programmtechnisch eingerichtet ist, mehrere Prozessorkerne zu nutzen.
Aspekt 6: Kommunikationssystem (2) nach Aspekt 5, wobei die Hauptsteuervorrichtung (4) zur Nutzung der mehreren Prozessorkerne a) einen ersten Applikationskern aufweist, der zur Steuerung der Maschinenfunktionen ausgebildet ist; und zumindest einen der folgenden Kerne aufweist: b)
   einen zweiten Applikationskern, der eine Telematik- und/oder Diagnosefunktionalität der landwirtschaftlichen Maschine ausbildet; c) einen Sicherheitskern, der ausgebildet ist, bei Vorliegen einer sicherheitskritischen Situation die Ansteuerung der landwirtschaftlichen Maschine oder mindestens eines Aktors der landwirtschaftlichen Maschine, der eine sicherheitsrelevante Bewegung im Sinne der funktionalen Sicherheit ausführt, durch den ersten Applikationskern zu übersteuern und die landwirtschaftliche Maschine und oder den mindestens einen Aktor in einen sicheren Betriebszustand im Sinne der funktionalen Sicherheit zu überführen; d) einen Echtzeit-Kern, der ausgebildet ist, ausgewählte Maschinenfunktionen der land-wirtschaftlichen Maschine in Echtzeit zu steuern, wobei vorzugsweise der Echtzeit-Kern auf einem separaten Prozessor implementiert ist, beispielsweise unter Verwendung eines Echtzeitbetriebssystems oder ohne Betriebssystem mittels einer sog. Bare-Metal-Programmierung.
Aspekt 7: Kommunikationssystem (2) nach Aspekt 6, umfassend den Sicherheitskern, der als Echtzeitkern implementiert ist.
Aspekt 8: Kommunikationssystem (2) nach einem der vorherigen Aspekte, wobei die Hauptsteuer-vorrichtung (4) ausgebildet ist, zu einem vorgebbaren Zeitpunkt eine Softwareaktualisierung einer Nebenbetriebskomponente (5) durchzuführen und dabei die zu aktualisierende Software von der Hauptsteuervorrichtung (4) über das Ethernet-Datennetz (3) an die Nebenbetriebskomponente (5) zu übertragen.
Aspekt 9: Kommunikationssystem (2) nach einem der vorherigen Aspekte, wobei die Hauptsteuer-vorrichtung (4) ausgebildet ist, zentral auf alle Datenkommunikationsschnittstellen (6,7, 8, 9a, 9b) im Kommunikationssystem (2) zur Ablaufverfolgung (engl. tracing) und/oder zum Logging zuzugreifen und die darüber erfassten Daten zu Diagnosezwecken bereitzustellen.
Aspekt 10: Kommunikationssystem (2) nach einem der vorherigen Aspekte, wobei die mindestens eine Nebenbetriebskomponente (5) eine Nebenbetriebskomponente (5c, 5d) aufweist, die als Ein- und Ausgangsmodul ausgebildet ist, jeweils aufweisend mindestens einen Eingangsanschluss zum Anschluss eines Sensors und mindestens einen Ausgangsanschluss zum Anschluss eines Aktors.
Aspekt 11: Kommunikationssystem (2) nach Aspekt 10,
   a) wobei alle Sensoren und Aktuatoren der landwirtschaftlichen Maschine über ein oder mehrere als Ein- und Ausgangsmodul ausgebildete Nebenbetriebskomponenten (5c, 5d) in Kommunikationsverbindung mit Hauptsteuervorrichtung (4) stehen; und/oder
   b) wobei die Hauptsteuervorrichtung (4) nur mittelbar mit Sensoren und Aktoren der landwirtschaftlichen Maschine in Kommunikationsverbindung steht, vorzugsweise über ei-ne oder mehrere als Ein- und Ausgangsmodul ausgebildete Nebenbetriebskomponenten; und/oder
   c) wobei die Hauptsteuervorrichtung (4) keine analogen Eingänge und keine analogen Ausgänge aufweist; und/oder
   d) wobei ein Ansteuern eines Aktors und/oder das Einlesen von Sensordaten eines Sen-sors ausschließlich durch eine oder mehrere als Ein- und Ausgangsmodul ausgebildete Nebenbetriebskomponenten (5c, 5d) erfolgt, die ausgebildet sind, das Ansteuern und/oder das Einlesen eigenständig oder in Abhängigkeit von Steuerbefehlen, die von der Hauptsteuervorrichtung erzeugt werden, durchzuführen.
Aspekt 12: Kommunikationssystem (2) nach einem der vorherigen Aspekte, wobei die mindestens eine Nebenbetriebskomponente (5) eine Nebenbetriebskomponente (5c, 5d) umfasst, die mit der Hauptsteuervorrichtung (4) nach dem Master-Slave-Prinzip gekoppelt ist, derart, dass die Nebenbetriebskomponente (5c, 5d) eingerichtet ist, Daten zu ihrem Betriebszustand an die Hauptsteuervorrichtung (4) zu senden und Steuersignale von der Hauptsteuer-vorrichtung (4) zu empfangen.
Aspekt 13: Kommunikationssystem (2) nach einem der vorherigen Aspekte, wobei die mindestens eine Nebenbetriebskomponente (5) eine Nebenbetriebskomponente aufweist, die ausgebildet ist,
   a) eine Sicherheitsfunktion im Sinne der funktionalen Sicherheit ausfüllen; und/oder
   b) bei Vorliegen einer sicherheitskritischen Situation die Ansteuerung der landwirtschaftlichen Maschine oder mindestens eines Aktors der landwirtschaftlichen Maschine, der eine sicherheitsrelevante Bewegung im Sinne der funktionalen Sicherheit ausführt, im Rahmen einer Vorrangsteuerung in einen sicheren Betriebszustand im Sinne der funktionalen Sicherheit zu überführen.
Aspekt 14: Kommunikationssystem (2) nach einem der vorherigen Aspekte, ferner umfassend einen Netzwerkverteiler des Ethernet-Datennetzes (3), der durch eine Nebenbetriebskomponente (5b) ausgebildet ist oder in die Hauptsteuervorrichtung (4) integriert ist.
Aspekt 15: Kommunikationssystem nach einem der vorherigen Aspekte, wobei die mindestens eine Nebenbetriebskomponente (5) eine Nebenbetriebskomponente (5d) aufweist, die zumindest eine der folgenden Datenkommunikationsschnittstellen aufweist, eine CAN-Datenbus-Schnittstelle (8), eine LIN-Bus-Schnittstelle, und eine ISOBUS-Schnittstelle.
Aspekt 16: Kommunikationssystem (2) nach einem der vorherigen Aspekte, ferner aufweisend mindestens eine zweite Nebenbetriebskomponente (14), die eine CAN-Datenbus-Schnittstelle (8) und/oder eine LIN-Bus-Schnittstelle aufweist, und die über ein CAN-Datennetz (13) und/oder ein LIN-Datennetz mit der Hauptbetriebskomponente (4) oder mit einer eine CAN-Datenbus-Schnittstelle (8) oder eine LIN-Bus-Schnittstelle aufweisende Nebenbetriebskomponente (5d) in Kommunikationsverbindung steht.
Aspekt 17: Kommunikationssystem (2) nach einem der vorherigen Aspekte, das ausgebildet ist, Positionsinformationen von einer Positionsbestimmungsvorrichtung (35), vorzugsweise von einer GNSS-Positionsbestimmungsvorrichtung, zu empfangen, wobei die Positionsbestimmungsvorrichtung (35) dazu ausgebildet ist, eine aktuelle Position der landwirtschaftlichen Maschine zu bestimmen.
Aspekt 18: Kommunikationssystem (2) nach Aspekt 17, wobei die Hauptsteuervorrichtung (4) zur Steuerung von einem positionsgenauen An- und Ab-schalten von Verteil- und/oder Bearbeitungsprozessen in Abhängigkeit von den empfangenen Positionsinformationen ausgebildet ist; und/oder b)
   die mindestens eine Nebenbetriebskomponente (5) eine Nebenbetriebskomponente aufweist, die zur Steuerung von einem positionsgenauen An- und Abschalten von Verteil- und/oder Bearbeitungsprozessen in Abhängigkeit von den empfangenen Positionsinformationen ausgebildet ist.
Aspekt 19: Kommunikationssystem (2) nach Aspekt 18, wobei die Hauptsteuervorrichtung (4) und/oder die Nebenbetriebskomponente zur Steuerung von einem manuellen An- und Ab-schalten von Verteil- und/oder Bearbeitungsprozessen in Abhängigkeit von einer Benutzer-eingabe ausgebildet ist und in Signalverbindung mit einer Eingabeeinrichtung zur Erfassung der Benutzereingabe steht und/oder bringbar ist.
Aspekt 20: Kommunikationssystem (2) nach Aspekt 18 oder Aspekt 19, wobei die Hauptsteuervorrichtung (4) und/oder die Nebenbetriebskomponente zur Steuerung des An- und Abschaltens von Verteil- und/oder Bearbeitungsprozessen ausgebildet ist, Spritzdüsen zur Ausbringung eines flüssigen Wirkstoffes und/oder Dosiereinrichtungen zur Ausbringung eines granularen Verteilguts anzusteuern.
Aspekt 21: Kommunikationssystem nach einem der vorherigen Aspekte, ferner aufweisend ein Überwachungsmodul, das Bestandteil der Hauptsteuervorrichtung ist oder mit dieser in Signalverbindung steht, und ausgebildet ist, Umfelddaten von mindestens einer Kamera zur Umfelderfassung und/oder von Umfeldsensoren zu empfangen und zur Umfeldüberwachung zu verarbeiten.
Aspekt 22: Kommunikationssystem nach Aspekt 21, wobei das Überwachungsmodul als ein Künstliches-Intelligenz-Modul, KI-Modul, ausgeführt ist, das zur Umfeldüberwachung die Umfeld-daten mittels Methoden des maschinellen Lernens, vorzugsweise mittels eines künstlichen neuronalen Netzes auswertet.
Aspekt 23: Landwirtschaftliche Maschine (1), vorzugsweise eine landwirtschaftliche Verteilmaschine, wie beispielsweise eine Feldspritze, ein pneumatischer Düngerstreuer oder eine Sämaschine, umfassend ein Kommunikationssystem (2) nach einem der vorherigen Aspekte.
Aspekt 24: Landwirtschaftliche Maschine nach Aspekt 23 zur landwirtschaftlichen Boden- oder Pflanzenbehandlung, wobei die landwirtschaftliche Maschine als gezogenes Anbaugerät ausgebildet ist.
Aspekt 25: Landwirtschaftliches Nutzfahrzeuggespann, aufweisend eine Zugmaschine, die als Traktor ausgeführt ist und das gezogene Anbaugerät nach Aspekt 24, wobei der Traktor ein von dem gezogenen Anbaugerät unterschiedliches Kommunikationssystem aufweist.
Aspekt 26: Landwirtschaftliches Nutzfahrzeuggespann, aufweisend eine autonome Zugmaschine (12), ein gezogenes Arbeitsgerät nach Aspekt 24 zur landwirtschaftlichen Boden- oder Pflanzenbehandlung,
   a) wobei die Hauptsteuervorrichtung (4) des Kommunikationssystems (2) ausschließlich an der Zugmaschine oder dem gezogenen Arbeitsgerät angeordnet ist und die mindestens ei-ne Nebenbetriebskomponente (5) Nebenbetriebskomponenten umfasst, die am Zugfahr-zeug angeordnet sind und Nebenbetriebskomponenten umfasst, die an dem gezogenen Arbeitsgerät angeordnet sind; oder
   b) wobei das landwirtschaftliche Nutzfahrzeuggespann zwei Kommunikationssysteme nach einem der Aspekte 1 bis 22 umfasst, wobei ein erstes Kommunikationssystem der Zugmaschine räumlich und funktional zugeordnet ist und ein zweites Kommunikationssystem dem gezogenen Arbeitsgerät räumlich und funktional zugeordnet ist.
Aspekte 27: Verfahren zur Herstellung einer landwirtschaftlichen Maschine nach einem der Aspekte 23 bis 26, umfassend die Schritte: Herstellen einer landwirtschaftlichen Maschine mit einer bestimmen Maschinenkonfiguration, wobei eine in einem ERP-System oder einem Computer einer Produktionslinie zur Her-stellung der landwirtschaftlichen Maschine hinterlegte Steuerungssoftware zur Steuerung der landwirtschaftlichen Maschine in Abhängigkeit von der bestimmten Maschinenkonfiguration ausgewählt und/oder parametrisiert wird und von dem ERP-System oder dem Computer der Produktionslinie in die Hauptsteuervorrichtung übertragen wird.
Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Landwirtschaftliche Maschine
- 2: Kommunikationssystem
- 3: Ethernet-Datennetz
- 4: Hauptsteuervorrichtung
- 5: Nebenbetriebskomponente
- 5a: Nebenbetriebskomponente als Kommunikationseinheit
- 5b: Nebenbetriebskomponente als Netzwerkverteiler
- 5c: Nebenbetriebskomponente als Ein-/Ausgabe-Modul (I/O-Modul)
- 5d: Nebenbetriebskomponente als Ein-/Ausgabe-Modul (I/O-Modul)
- 5e: Nebenbetriebskomponente mit CAN- oder LIN-Schnittstelle
- 6: Ethernet-Schnittstelle
- 7: ISOBUS-Schnittstelle
- 8: CAN-Schnittstelle
- 9a: Mobilfunkschnittstelle
- 9b: Drahtlos-Nahbereichsverbindungs-Schnittstelle, z. B: WLAN-Schnittstelle
- 10: ISOBUS
- 11: Schnittstelle zu Kommunikationsnetz einer eigenständig betreibbaren Fremd-Landmaschine
- 12: Schnittstelle zu Kommunikationsnetz einer nicht-eigenständig betreibbaren Fremd-Landmaschine
- 13: CAN-Datennetz
- 14: Zweite Nebenbetriebskomponente
- 15: Subsystem aus zweiten Nebenbetriebskomponenten
- 20: Kommunikationssystem einer eigenständig betreibbaren Fremd-Landmaschine
- 30: Externe Drahtlos-Kommunikationseinheit
- 31: Nutzfahrzeuggespann
- 32: Zugmaschine
- 33: Gelenk
- 34: Gezogenes Arbeitsgerät
- 35: Positionsbestimmungsvorrichtung
- 36: Traktionselemente
- 38: Umgebungserfassungssensorik
- 40: Kommunikationssystem eines weiteren landwirtschaftlichen Nutzfahrzeugs
- 50: Kommunikationssystem einer nicht eigenständig betreibbaren landwirtschaftlichen Landmaschine

## Patentansprüche

1. Kommunikationssystem (2) für eine landwirtschaftliche Maschine (1), umfassend eine Hauptsteuervorrichtung (4), die als zentrale Rechen- und Steuereinheit zur Steuerung von Maschinenfunktionen, wie vorzugsweise dem positionsgenauen An- und Abschalten von Verteil- und/oder Bearbeitungsprozessen, ausgebildet ist;
mindestens eine Nebenbetriebskomponente (5), die ausgebildet ist, eine ihr zugeordnete Betriebsfunktion in Abhängigkeit von Steuerdaten der Hauptsteuervorrichtung (4) und/oder eigenständig durchzuführen,
wobei die Hauptsteuervorrichtung (4) und die mindestens eine Nebenbetriebskomponente (5) jeweils mindestens eine Ethernet-Schnittstelle (6) zum Anschluss an ein Ethernet-Datennetz (3) aufweisen, zum Senden und/oder Empfangen von Daten über das Ethernet-Datennetz (3) bei einer Steuerung von Maschinenfunktionen.

2. Kommunikationssystem (2) nach Anspruch 1, wobei die Hauptsteuervorrichtung (4) zumindest eine der folgenden Datenkommunikationsschnittstellen aufweist: eine CAN-Datenbus-Schnittstelle (8), eine ISOBUS-Schnittstelle (7), eine Highspeed ISOBUS und eine Local Interconnect Network-, LIN, -Bus-Schnittstelle.

3. Kommunikationssystem (2) nach Anspruch 1 oder 2, ferner umfassend
a) eine Mobilfunkschnittstelle (9a), und/oder
b) mindestens eine Drahtlos-Nahbereichsverbindungs-Schnittstelle, beispielsweise eine WLAN-oder eine Bluetooth-Schnittstelle (9b),
die in die Hauptsteuervorrichtung (4) integriert ist und/oder sind oder durch eine (5a) der mindestens einen Nebenbetriebskomponente (5) bereitgestellt wird und/oder werden.

4. Kommunikationssystem (2) nach einem der vorherigen Ansprüche, wobei die Hauptsteuervorrichtung (4) ausgebildet ist, zu einem vorgebbaren Zeitpunkt eine Softwareaktualisierung einer Nebenbetriebskomponente (5) durchzuführen und dabei die zu aktualisierende Software von der Hauptsteuervorrichtung (4) über das Ethernet-Datennetz (3) an die Nebenbetriebskomponente (5) zu übertragen.

5. Kommunikationssystem (2) nach einem der vorherigen Ansprüche, wobei die mindestens eine Nebenbetriebskomponente (5) eine Nebenbetriebskomponente (5c, 5d) aufweist, die als Ein- und Ausgangsmodul ausgebildet ist, jeweils aufweisend mindestens einen Eingangsanschluss zum Anschluss eines Sensors und mindestens einen Ausgangsanschluss zum Anschluss eines Aktors, wobei vorzugsweise
a) alle Sensoren und Aktuatoren der landwirtschaftlichen Maschine über ein oder mehrere als Ein- und Ausgangsmodul ausgebildete Nebenbetriebskomponenten (5c, 5d) in Kommunikationsverbindung mit Hauptsteuervorrichtung (4) stehen; und/oder
b) die Hauptsteuervorrichtung (4) nur mittelbar mit Sensoren und Aktoren der landwirtschaftlichen Maschine in Kommunikationsverbindung steht, vorzugsweise über eine oder mehrere als Ein- und Ausgangsmodul ausgebildete Nebenbetriebskomponenten; und/oder
c) die Hauptsteuervorrichtung (4) keine analogen Eingänge und keine analogen Ausgänge aufweist; und/oder
d) ein Ansteuern eines Aktors und/oder das Einlesen von Sensordaten eines Sensors ausschließlich durch eine oder mehrere als Ein- und Ausgangsmodul ausgebildete Nebenbetriebskomponenten (5c, 5d) erfolgt, die ausgebildet sind, das Ansteuern und/oder das Einlesen eigenständig oder in Abhängigkeit von Steuerbefehlen, die von der Hauptsteuervorrichtung erzeugt werden, durchzuführen.

6. Kommunikationssystem (2) nach einem der vorherigen Ansprüche, ferner umfassend einen Netzwerkverteiler des Ethernet-Datennetzes (3), der durch eine Nebenbetriebskomponente (5b) ausgebildet ist oder in die Hauptsteuervorrichtung (4) integriert ist.

7. Kommunikationssystem nach einem der vorherigen Ansprüche, wobei die mindestens eine Nebenbetriebskomponente (5) eine Nebenbetriebskomponente (5d) aufweist, die zumindest eine der folgenden Datenkommunikationsschnittstellen aufweist, eine CAN-Datenbus-Schnittstelle (8), eine LIN-Bus-Schnittstelle, und eine ISOBUS-Schnittstelle.

8. Kommunikationssystem (2) nach einem der vorherigen Ansprüche, ferner aufweisend mindestens eine zweite Nebenbetriebskomponente (14), die eine CAN-Datenbus-Schnittstelle (8) und/oder eine LIN-Bus-Schnittstelle aufweist, und die über ein CAN-Datennetz (13) und/oder ein LIN-Datennetz mit der Hauptbetriebskomponente (4) oder mit einer eine CAN-Datenbus-Schnittstelle (8) oder eine LIN-Bus-Schnittstelle aufweisende Nebenbetriebskomponente (5d) in Kommunikationsverbindung steht.

9. Kommunikationssystem (2) nach einem der vorherigen Ansprüche, das ausgebildet ist, Positionsinformationen von einer Positionsbestimmungsvorrichtung (35), vorzugsweise von einer GNSS-Positionsbestimmungsvorrichtung, zu empfangen, wobei die Positionsbestimmungsvorrichtung (35) dazu ausgebildet ist, eine aktuelle Position der landwirtschaftlichen Maschine zu bestimmen.

10. Kommunikationssystem (2) nach Anspruch 9, wobei
a) die Hauptsteuervorrichtung (4) zur Steuerung von einem positionsgenauen An- und Abschalten von Verteil- und/oder Bearbeitungsprozessen in Abhängigkeit von den empfangenen Positionsinformationen ausgebildet ist; und/oder
b) die mindestens eine Nebenbetriebskomponente (5) eine Nebenbetriebskomponente aufweist, die zur Steuerung von einem positionsgenauen An- und Abschalten von Verteil- und/oder Bearbeitungsprozessen in Abhängigkeit von den empfangenen Positionsinformationen ausgebildet ist.

11. Kommunikationssystem (2) nach Anspruch 10, wobei die Hauptsteuervorrichtung (4) und/oder die Nebenbetriebskomponente zur Steuerung des An- und Abschaltens von Verteil- und/oder Bearbeitungsprozessen ausgebildet ist, Spritzdüsen zur Ausbringung eines flüssigen Wirkstoffes und/oder Dosiereinrichtungen zur Ausbringung eines granularen Verteilguts anzusteuern.

12. Kommunikationssystem nach einem der vorherigen Ansprüche, ferner aufweisend ein Überwachungsmodul, das Bestandteil der Hauptsteuervorrichtung ist oder mit dieser in Signalverbindung steht, und ausgebildet ist, Umfelddaten von mindestens einer Kamera zur Umfelderfassung und/oder von Umfeldsensoren zu empfangen und zur Umfeldüberwachung zu verarbeiten.

13. Landwirtschaftliche Maschine (1), vorzugsweise eine landwirtschaftliche Verteilmaschine, wie beispielsweise eine Feldspritze, ein pneumatischer Düngerstreuer oder eine Sämaschine, umfassend ein Kommunikationssystem (2) nach einem der vorherigen Ansprüche.

14. Landwirtschaftliche Maschine nach Anspruch 13 zur landwirtschaftlichen Boden- oder Pflanzenbehandlung, wobei die landwirtschaftliche Maschine als gezogenes Anbaugerät ausgebildet ist.

15. Landwirtschaftliches Nutzfahrzeuggespann, aufweisend eine autonome Zugmaschine (12), ein gezogenes Arbeitsgerät nach Anspruch 14 zur landwirtschaftlichen Boden- oder Pflanzenbehandlung,
a) wobei die Hauptsteuervorrichtung (4) des Kommunikationssystems (2) ausschließlich an der Zugmaschine oder dem gezogenen Arbeitsgerät angeordnet ist und die mindestens eine Nebenbetriebskomponente (5) Nebenbetriebskomponenten umfasst, die am Zugfahrzeug angeordnet sind und Nebenbetriebskomponenten umfasst, die an dem gezogenen Arbeitsgerät angeordnet sind; oder
b) wobei das landwirtschaftliche Nutzfahrzeuggespann zwei Kommunikationssysteme nach einem der Ansprüche 1 bis 12 umfasst, wobei ein erstes Kommunikationssystem der Zugmaschine räumlich und funktional zugeordnet ist und ein zweites Kommunikationssystem dem gezogenen Arbeitsgerät räumlich und funktional zugeordnet ist.

16. Verfahren zur Herstellung einer landwirtschaftlichen Maschine nach einem der Ansprüche 13 bis 15, umfassend die Schritte:
Herstellen einer landwirtschaftlichen Maschine mit einer bestimmen Maschinenkonfiguration, wobei eine in einem ERP-System oder einem Computer einer Produktionslinie zur Herstellung der landwirtschaftlichen Maschine hinterlegte Steuerungssoftware zur Steuerung der landwirtschaftlichen Maschine in Abhängigkeit von der bestimmten Maschinenkonfiguration ausgewählt und/oder parametrisiert wird und von dem ERP-System oder dem Computer der Produktionslinie in die Hauptsteuervorrichtung übertragen wird.
